# EUROPÄISCHE PATENTANMELDUNG

(11) **EP 3 075 497 A1**
(43) Veröffentlichungstag der Anmeldung: **05.10.2016**
(21) Anmeldenummer: 16161909.3
(22) Anmeldetag: 23.03.2016
(51) Int. Cl.: B25J 15/04

(54) **KUPPLUNGSEINRICHTUNG UND KUPPLUNGSVERFAHREN**

(30) Priorität: 31.03.2015 DE 202015101616 U
(71) Anmelder: KUKA Systems GmbH, 86165 Augsburg (DE)
(72) Erfinder: HEINRICH, Harald, 86529 Schrobenhausen (DE); STOCKSCHLÄDER, Julian, 86152 Augsburg (DE); LACHNER, Johannes, 85250 Altomünster (DE)
(74) Vertreter: Ernicke, Klaus Stefan

(57) **Zusammenfassung**

Die Erfindung betrifft ein Kupplungsverfahren und eine Kupplungseinrichtung (2) für einen Industrieroboter (4) und ein Werkzeug (3). Die Kupplungseinrichtung (2) weist mehrere miteinander verbindbare Kupplungsteile (26,27) mit einer mechanischen Kupplung (28) und einer Medienkupplung (29) auf, wobei die mechanische Kupplung (28) formschlüssig entlang einer Kupplungsachse (39) ineinander greifende Kupplungselemente (30,31) an den Kupplungsteilen (26,27) und eine zwischen den Kupplungselementen (30,31) wirkende Verriegelung (6) mit einer Betätigungseinrichtung (7) aufweist. Die Verriegelung (6) weist kupplungsintern angeordnete Riegelelemente (42-44) auf, wobei die Betätigungseinrichtung (7) getrennt von den Riegelelementen (42-44) und relativ zu diesen beweglich an der Kupplungseinrichtung (2) angeordnet ist. Die Betätigungseinrichtung (7) wird zum Öffnen und Schließen der Verriegelung (6) durch eine Verlagerungs- und Drehbewegung des Industrieroboters (4) um die Kupplungsachse (39) aktiviert.

## Beschreibung

Die Erfindung betrifft eine Kupplungseinrichtung und ein Kupplungsverfahren für Roboter und Werkzeuge mit den Merkmalen im Oberbegriff des Verfahrens- und Vorrichtungshauptanspruchs.

Eine solche Kupplungseinrichtung ist aus der DE 20 2012 100 384 U1 bekannt. Zwischen den formschlüssig ineinander greifenden mechanischen Kupplungselementen wirkt eine Verriegelung, deren Verriegelungselemente mit einer nach außen ragenden Betätigungseinrichtung einstückig ausgebildet sind. Die Betätigungseinrichtung ist als Vorsprung an einem Schieber, Federarm oder Schwenkarm ausgebildet und wird durch eine Verlagerungsbewegung des Industrieroboters aktiviert bzw. betätigt.

Es ist Aufgabe der vorliegenden Erfindung, eine weiter verbesserte Kupplungstechnik aufzuzeigen.

Die Erfindung löst diese Aufgabe mit den Merkmalen im Verfahrens- und Vorrichtungshauptanspruch.
Die beanspruchte Kupplungstechnik, d.h. die Kupplungseinrichtung und das Kupplungsverfahren sowie eine damit ausgestattete Arbeitsvorrichtung, haben verschiedene Vorteile.

Die Kupplungseinrichtung kann bei der Drehbewegung des Industrieroboters um die Kupplungsachse zum Öffnen und Schließen der Verriegelung eine besser definierte Lage einnehmen, z.B. an einem Werkzeughalter. Dies hat Vorteile beim erneuten Ankuppeln des Werkzeuges. Zudem sind die Endlagen der aktivierenden bzw. betätigenden Drehbewegung besser definiert. Sie können auch sensorisch überwacht und/oder optisch angezeigt werden. Für eine automatisierte Kupplungsbetätigung ergibt sich hierdurch eine verbesserte Genauigkeit und Betriebssicherheit.

Die Bewegungen der Betätigungseinrichtung können auf kupplungsintern angeordnete Riegelelemente in geeigneter Weise übertragen werden. Die Riegelelemente können geschützt und im Wesentlichen gekapselt im Inneren der Kupplungseinrichtung untergebracht werden. Die Beschädigungsgefahr der Riegelelemente bei eventuellen Werkzeug- oder Roboterkollisionen ist dadurch gemindert.

Von Außen ist vorzugsweise nur die Betätigungseinrichtung zugänglich. Deren Betätiger hat eine verbesserte Störkontur, insbesondere in der bevorzugten Ausführung als Betätigungsring. Zudem wird die Unfall- und Betriebssicherheit optimiert. Die beanspruchte Kupplungstechnik hat besondere Vorteile beim Einsatz in einer Mensch-Roboter-Kooperation oder -Kollaboration (MRK).

Die kupplungsinternen Riegelelemente und die von außen zugängliche Kupplungseinrichtung haben eine unterschiedliche Kinematik mit differierenden Arten und Richtungen ihrer Bewegungen. Die getrennte Anordnung der Riegelelemente und der Betätigungseinrichtung hat ferner den Vorteil, dass eine Mehrfachanordnung von Riegelelementen und deren Verteilung über den Umfang der Kupplungselemente möglich ist. Die Riegelelemente können dadurch an mehreren verschiedenen Stellen zwischen den im Eingriff stehenden mechanischen Kupplungselementen wirken. Hierdurch können die im Prozess auftretenden Kräfte und Momente über die Kupplungseinrichtung besser übertragen werden. Zudem ergibt sich eine optimierte Spielfreiheit. Ein Einzelner und vorzugsweise ringförmiger Betätiger kann mehrere Riegelelemente gleichzeitig beaufschlagen. Die Riegelelemente können zudem einzeln bewegliche Elemente aufweisen, die rollend oder gleitend zwischen einer Eingriffs- und Freigabestellung bewegt werden können. Vorzugsweise können Rollkörper, insbesondere Kugeln, eingesetzt werden.

Die Betätigungseinrichtung kann zum Öffnen und Schließen der Verriegelung eine translatorische Bewegung ausführen, die durch die Drehbewegung des Industrieroboters um die Kupplungsachse induziert und insbesondere mittels eines Drehumsetzers umgesetzt wird. Eine translatorische Bewegung, insbesondere eine längs der Kupplungsachse erfolgende Verschiebebewegung, ist für eine Betätigung und Bewegung rollfähiger Kupplungselemente von besonderem Vorteil.

Der Betätiger kann eine Drehsperre aufweisen, die mit einem externen Widerlager zum An- und Abkuppeln zusammenwirkt. Die besagte Drehbewegung um die Kupplungsachse kann von den mittels einer Drehsicherung drehschlüssig verbundenen Kupplungselementen ausgeführt werden, wobei der bevorzugt als Kulissenführung ausgebildete Drehumsetzer diese Drehung in eine translatorische Hubbewegung des dabei gegen Mitdrehen gesperrten Betätigers umsetzen kann. Dies ist eine besonders einfache und sichere Kinematik, die auch Vorteile hinsichtlich des Verschleißes mitbringt.

Der Drehumsetzter kann in einer oder beiden Endlagen eine Raste aufweisen, die für die Endlagendefinition und deren sichere Einnahme von Vorteil ist. Die Betätigungseinrichtung und die Verriegelung können dadurch zum An- und Abkuppeln exakt definierte Lagen einnehmen, was besondere Vorteile für die Automatisierung und die Kupplungssicherheit mit sich bringt. Die Endlagen können von einem taktilen Industrieroboter erfasst und ausgewertet werden. Vorteilhafterweise kann außerdem eine Arretierung, insbesondere Dreharretierung vorhanden sein, die zwischen dem Betätiger und dem roboterseitigen Kupplungselement in einer oder beiden Endlagen des Drehumsetzers wirkt und für eine mechanische Fixierung des Betätigers und der Verriegelung sorgt. Hierdurch kann der Betätiger sich nicht unerkannt durch äußere Einflüsse bewegen und samt der Verriegelung ein undefinierte Position einnehmen. Dies ist besonders im abgekuppelten Zustand von Vorteil.

Das roboterseitige Kupplungsteil kann bevorzugt als integraler Bestandteil eines Abtriebselements, insbesondere eines Abtriebsflansches, des Industrieroboters ausgebildet sein. Dies ist vor allem für eine roboterinterne Leitungsführung für die Medienübertragung günstig. Der Kapselungs- und Verkleidungsaufwand sowie die Störkonturen können dadurch minimal gehalten werden. Alternativ können das roboterseitige Kupplungsteil und das Abtriebselement getrennte Bauteile sein, wobei das Abtriebselement z.B. ein Standardflansch sein kann. Die bevorzugte integrale Anordnung hat auch Vorteile für eine interne Leitungsführung zum Leitungsanschluss am roboterseitigen Kupplungsteil.

Die beanspruchte Kupplungseinrichtung eignet sich besonders für den Einsatz an einem mehrachsigen programmierbaren und taktilen Industrieroboter mit sensitiven Fähigkeiten. Ein solcher Industrieroboter kann auch als Leichtbauroboter mit relativ geringer Tragkraft ausgebildet sein. Die beanspruchte Kupplungseinrichtung baut sehr klein und leichtgewichtig, was für einen solchen Industrieroboter von besonderem Vorteil ist. Insbesondere können die sensitiven Fähigkeiten des taktilen Roboters durch die exakte Übertragung der Bewegungen des Werkzeugs und die von außen einwirkenden Kräfte und Momente über die Kupplungseinrichtung an den Industrieroboter optimal eingesetzt und ausgenutzt werden. Die exakte Kupplungstechnik ist für die Feinfühligkeit des taktilen Industrieroboters besonders günstig. Auch im MRK-Einsatz wirkt sich dies sehr vorteilhaft aus. Der taktile Industieroboter kann auch auf leichte Kollisionen und dabei auftretende geringe mechanische Belastungen feinfühlig und exakt reagieren sowie Verletzungen eines Werkers im Kollisionsfall vermeiden. Anderweitige Kollisionen können dank exakter Kupplungsübertragung genau nach Auftrittsort, Richtung und Auswirkung detektiert werden. Dies erlaubt genaue und zielgerichtete Roboterreaktionen.

Weitere Vorteile der beanspruchten Kupplungstechnik liegen in der kostengünstigen Ausführung des Werkzeughalters, die nur einen geringen Bau- und Platzaufwand erfordert und eine exakte Halte- und Positionierfunktion mit einer translatorischen und einer rotatorischen Lagesicherung eines aufgenommenen werkzeugseitigen Kupplungsteils bietet. Der Werkzeughalter kann mit beliebiger räumlicher Orientierung, z.B. stehend, liegend oder schräg und auch mit Zugang seiner Aufnahmeöffnung von unten montiert werden. Auch das Widerlager für die Drehsperre und das Betätigungsmittel für die Dreharretierung der Betätigungseinrichtung können auf einfache, kostengünstige und betriebssichere Weise realisiert werden.

Die Kupplungseinrichtung für einen Industrieroboter und ein Werkzeug weist bevorzugt mehrere miteinander verbindbare Kupplungsteile mit einer mechanischen Kupplung und einer Medienkupplung auf, wobei die mechanische Kupplung formschlüssig entlang einer Kupplungsachse ineinander greifende Kupplungselemente an den Kupplungsteilen und eine zwischen den Kupplungselementen wirkende Verriegelung mit einer Betätigungseinrichtung aufweist, die durch eine Verlagerungsbewegung des Industrieroboters aktivierbar ist, wobei die Verriegelung kupplungsintern angeordnete Riegelelemente aufweist, wobei die Betätigungseinrichtung getrennt von den Riegelelementen und relativ zu diesen beweglich an der Kupplungseinrichtung angeordnet ist und wobei die Betätigungseinrichtung zum Öffnen und Schließen der Verriegelung durch eine Drehbewegung des Industrieroboters um die Kupplungsachse aktiviert wird.

Die Betätigungseinrichtung ist in einer Ausgestaltung am roboterseitigen Kupplungsteil angeordnet. Die Betätigungseinrichtung kann in einer Ausführungsform zum Öffnen und Schließen der Verriegelung eine translatorische Bewegung ausführt, die durch die Drehbewegung des Industrieroboters um die Kupplungsachse induziert wird. Der Betätiger kann zum Verriegeln eine Riegelaufnahme für ein Riegelelement aufweist.

Die Betätigungseinrichtung weist in einer Ausführung einen Betätiger auf, der mit dem roboterseitigen Kupplungselement über einen Drehumsetzer verbunden ist, welcher eine Drehbewegung des Kupplungselements in eine translatorische Bewegung des Betätigers umsetzt. Der Drehumsetzer kann als Kulissenführung ausgebildet sein und kann bevorzugt eine Raste an zumindest einer Endstellung aufweisen.

Der Betätiger kann in einer Ausgestaltung als Betätigungsring ausgebildet sein, der außenseitig auf dem roboterseitigen Kupplungselement angeordnet ist. Die Betätigungseinrichtung kann in einer Ausführung eine Dreharretierung für den Betätiger aufweist, die durch eine Verlagerungsbewegung des Industrieroboters aktivierbar ist.

Die Verriegelung kann formschlüssig ineinander greifende und relativ zueinander bewegliche Riegelelemente an den Kupplungsteilen aufweisen. Die Riegelelemente sind bevorzugt als Kugeln und Kugelaufnahmen am roboterseitigen Kupplungselement und als Schulter am werkzeugseitigen Kupplungselement ausgebildet sind.

Der Betätiger kann eine Drehsperre aufweisen, die zum An- und Abkuppeln mit einem externen Widerlager zusammenwirkt. Die Drehsperre kann z.B. als eine Schlüsselfläche an der Außenseite des Betätigers ausgebildet sein.

Die Medienkupplung kann elektrische und/oder fluidische mediale Kupplungsmittel aufweisen. Das roboterseitige Kupplungsteil kann einen Leitungsanschluss aufweisen, der mit einer roboterinternen Medienleitung direkt und innerhalb eines integralen Abtriebselements des Industrieroboters verbunden ist. Das roboterseitige Kupplungsteil kann in einer Ausführung einen Leitungsanschluss aufweisen, der mit einem externen Leitungsaustritt an einem Abtriebselement des Industrieroboters über eine Verbindungsleitung koppelbar ist.

Die Kupplungselemente der Kupplungseinrichtung können als ineinander steckbare Ringflansche ausgebildet sein. Sie können die medialen Kupplungsmittel der Medienkupplung umschließen.

Die Kupplungselemente der Kupplungseinrichtung können in einer Ausgestaltung eine Drehsicherung aufweisen, die in Kupplungsstellung wirksam ist und die Kupplungselemente drehschlüssig verbindet. Im abgekuppelten Zustand ist die Drehsicherung unwirksam.

Das roboterseitige Kupplungsteil der Kupplungseinrichtung kann als Anbauteil zum Anbau an einem Abtriebselement eines Industrieroboters ausgebildet sein. Es kann in einer anderen Ausführung integraler Bestandteil für ein Abtriebselement eines Industrieroboters ausgebildet sein. Andererseits kann ein Abtriebselement des Industrieroboters als Kupplungsteil einer Kupplungseinrichtung ausgebildet sein.

Die Kupplungseinrichtung kann für eine Mensch-Roboter-Kollaboration oder Kooperation (MRK) tauglich ausgebildet sein. Sie kann insbesondere eine MRK-taugliche Schutzverkleidung aufweisen. Diese kann Leitungen und andere Teile der Kupplungseinrichtung schützend umgeben.

Die Kupplungseinrichtung eignet sich besonders für einen mehrachsigen programmierbaren und taktilen Industrieroboter mit sensitiven Fähigkeiten und mit einer zugeordneten, einwirkende Belastungen erfassenden Sensorik. Sie kann hierfür vorgesehen und ausgebildet sein. Der taktile Industrieroboter kann für eine MRK tauglich ausgebildet sein und seine sensitiven Fähigkeiten hierfür einsetzen.

Der Industrieroboter ist bevorzugt taktil ausgebildet und besitzt sensitive Fähigkeiten. Er kann eine oder mehrere kraftgesteuerte oder kraftgeregelte Roboterachsen (I - VII) mit einer zugeordneten, einwirkende Belastungen erfassenden Sensorik aufweisen. Bevorzugt weist der Industrieroboter eine integrierte Sensorik auf.

Der Industrieroboter kann mindestens eine nachgiebige Achse (I - VII) mit einer Nachgiebigkeitsregelung, insbesondere einer reinen Kraftregelung oder einer Kombination aus Positions- und Kraftregelung, aufweisen.

Der Industrieroboter kann in einer Ausgestaltung als Leichtbauroboter ausgebildet sein.

Der Industrieroboter weist vorzugsweise eine interne Leitungsführung mit fluidischen und/oder elektrischen Medienleitungen durch seine Glieder aufweist, die mit einem Leitungsanschluss am Kupplungsteil verbunden ist/sind.

Die Arbeitsvorrichtung weist in einer Ausgestaltung einen Werkzeughalter mit einer Aufnahmeöffnung für die formschlüssige Aufnahme von einem Werkzeug. Der Werkzeughalter kann Halteelemente für den mechanischen Halt und die translatorische und ggf. rotatorische Lagesicherung eines aufgenommenen werkzeugseitigen Kupplungsteils aufweisen. Der Werkzeughalter kann in einer Ausführung ein Widerlager für eine Drehsperre der Betätigungseinrichtung und/oder ein Betätigungsmittel für eine Dreharretierung der Betätigungseinrichtung aufweisen.

Die Arbeitsvorrichtung kann ein Werkzeugwechselsystem mit einer Bereitstellung, insbesondere einem Magazin, mit mehreren Werkzeughaltern und mit mehreren Werkzeugen aufweisen.

Die Erfindung ist in den Zeichnungen beispielhaft und schematisch dargestellt. Im Einzelnen zeigen:
- Figur 1:: eine Arbeitsvorrichtung mit einem Industrieroboter, einer teilweise aufgebrochen dargestellten Kupplungseinrichtung und Werkzeughaltern,
- Figur 2:: eine Explosionsdarstellung von Teilen der Kupplungseinrichtung,
- Figur 3:: eine teilweise aufgebrochene Seitenansicht der Kupplungseinrichtung in Eingriffstellung an einem Werkzeughalter,
- Figur 4:: einen abgebrochenen Längsschnitt durch eine erste Variante der Kupplungseinrichtung,
- Figur 5:: eine andere aufgebrochene Darstellung der Kupplungseinrichtung von Figur 4,
- Figur 6:: eine perspektivische Ansicht eines Werkzeughalters,
- Figur 7:: eine abgebrochene und teilweise geschnittene Darstellung des Industrieroboters, des Werkzeugs und der geöffneten Kupplungseinrichtung in der ersten Variante,
- Figur 8 bis 11:: einen Ankuppelvorgang in mehreren Betriebsschritten,
- Figur 12 und 13:: eine zweite Variante der Kupplungseinrichtung in verschiedenen perspektivischen Ansichten an einem Werkzeughalter,
- Figur 14:: eine Explosionsdarstellung der zweiten Variante,
- Figur 15:: einen Querschnitt durch die Kupplungseinrichtung gemäß Figur 12, 13 und 14,
- Figur 16 bis 18:: verschiedene perspektivische Ansichten von roboter- und werkzeugseitigen Kupplungsteilen der zweiten Variante,
- Figur 19:: eine perspektivische abgebrochene Ansicht einer Dreharretierung der Kupplungseinrichtung in der zweiten Variante,
- Figur 20 bis 25:: eine Variante des Werkzeughalters und der Kupplungseinrichtung in verschiedenen Ansichten und Betriebsstellungen,
- Figur 26:: einen Halbschnitt durch den Werkzeughalter und die Kupplungseinrichtung der Variante von Figur 20 bis 25 und
- Figur 27:: eine perspektivische Unteransicht der Kupplungseinrichtung der Variante von Figur 20 bis 25.

Die Erfindung betrifft eine automatische Kupplungseinrichtung (2) und ein Kupplungsverfahren zum An- und Abkuppeln eines Industrieroboters (4) mit einem Werkzeug (3). Die Erfindung betrifft ferner eine Arbeitsvorrichtung (1) mit einem Industrieroboter (4), einem Werkzeug (3) und einer Kupplungseinrichtung (2).

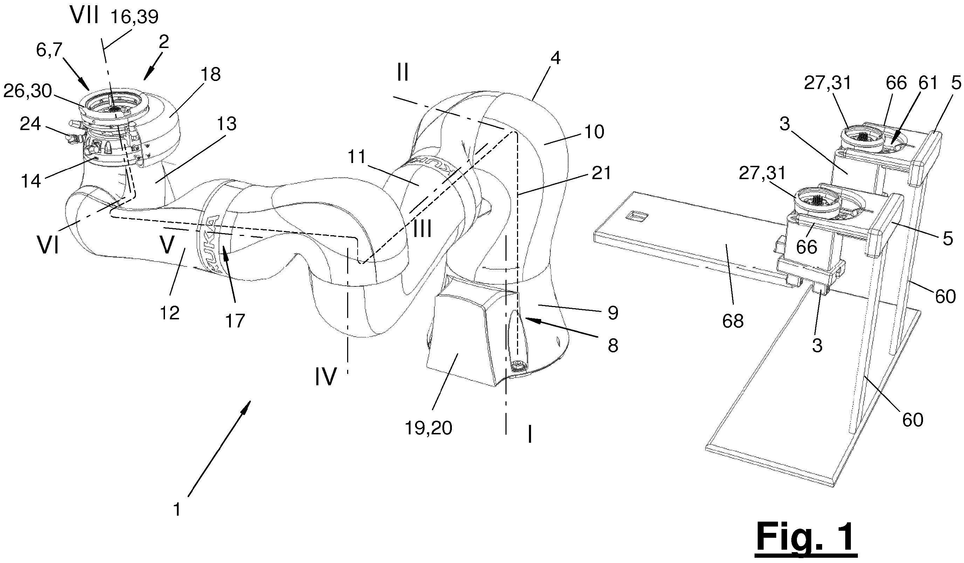

Figur 1 zeigt eine solche Arbeitsvorrichtung (1) mit einem mehrachsigen programmierbaren Industrieroboter (4), der bevorzugt als taktiler Roboter ausgebildet ist und sensitive Fähigkeiten hat. Weitere Einzelheiten des Industrieroboters (4) werden nachfolgend erläutert.

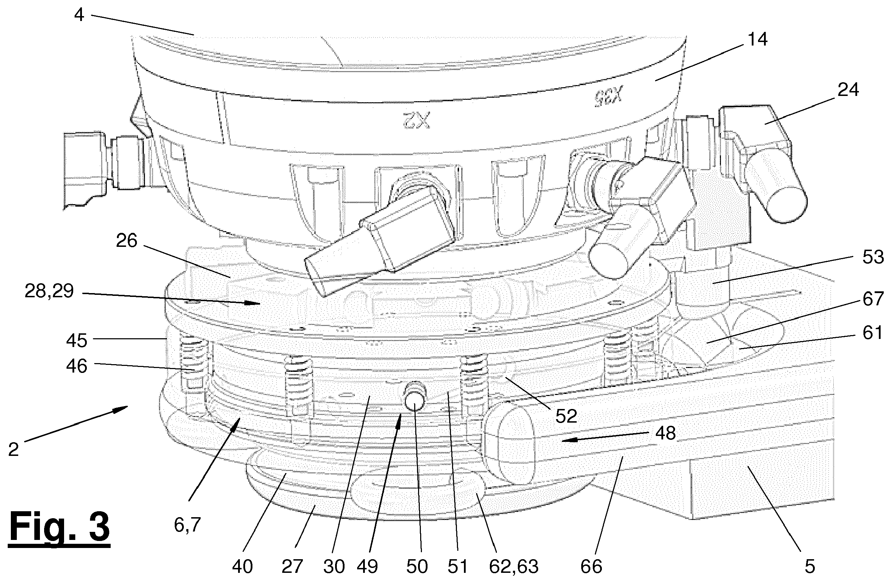

Der Industrieroboter (4) hat ein Abtriebselement (14,15), welches mit der automatischen Kupplungseinrichtung (2) verbunden ist. In den gezeigten Ausführungsbeispielen von Figur 1 bis 11 und Figur 20 bis 27 ist das Abtriebselement (14) als Standardflansch ausgebildet. Es dreht um eine Abtriebsachse (16), die zugleich die letzte Achse (VII) des Industrieroboters (4) darstellt. Die Kupplungseinrichtung (2) weist eine Kupplungsachse (39) auf, die vorzugsweise mit der Abtriebsachse (16) zusammenfällt.

Die Kupplungseinrichtung (2) ist als eine vom Industrieroboter (4) automatisch betätigbare Wechselkupplung ausgebildet und erlaubt den automatischen Wechsel von Werkzeugen (3) an ein oder mehreren Werkzeughaltern (5), die im Arbeitsbereich des Industrieroboters (4) angeordnet sind. In Figur 1 ist außerdem noch ein Werkstück (68) schematisch dargestellt, an dem mit verschiedenen Werkzeugen (3) unterschiedliche Prozesse durchgeführt werden. Die Prozesse können von beliebiger Art sein, z.B. Fügeprozesse mit Schweißen, Kleben oder dgl., Montageprozesse, Handhabungsprozesse oder Bearbeitungsprozesse mit Materialauftrag, spanabhebender Bearbeitung oder dgl..

Der Industrieroboter (4) hat eine integrierte Leitungsführung (8) für die Werkzeugversorgung mit ein oder mehreren Medien. Derartige Medien können z.B. elektrische Signal- und/oder Leistungsströme, Fluide, insbesondere Druckluft, Kühlmittel, Hydraulikflüssigkeit oder dgl. sein. In den hohlen Gliedern (9 - 13) des Industrieroboters (4) können ein oder mehrere Medienleitungen (21) von einem externen Medienanschluss (20) im Fußbereich des Industrieroboters (4) bis zum Abtriebselement (14,15) verlegt werden und dort aus dem Industrieroboter (4) heraustreten.

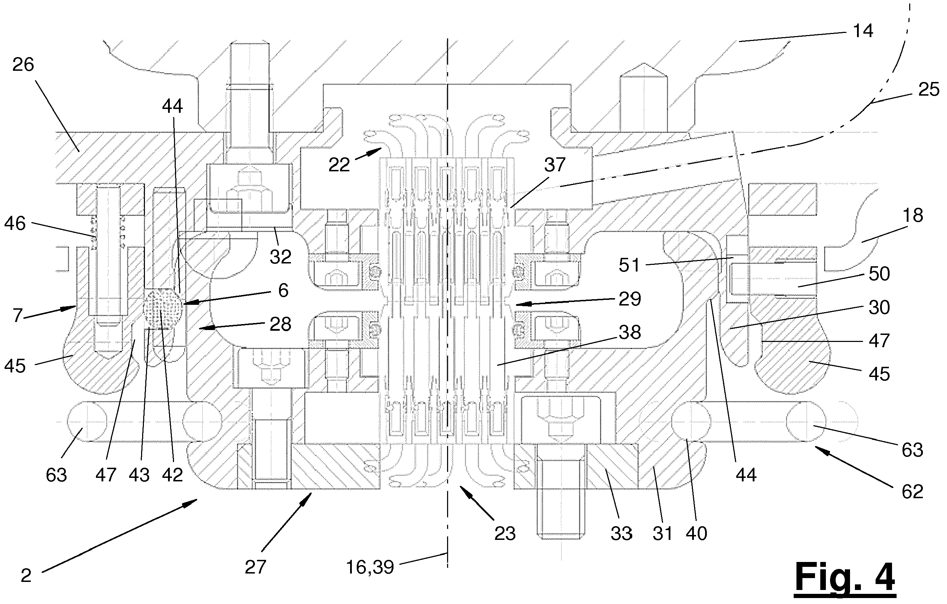

In Figur 1 ist die Kupplungseinrichtung (2) teilweise geöffnet dargestellt. In der hier gezeigten ersten Variante wird die Kupplungseinrichtung (2) am standardmäßigen Abtriebselement (14) in geeigneter Weise befestigt, z.B. angeschraubt. Am Mantel des Abtriebselements (14) befinden sich mehrere Leitungsaustritte (24) mit geeigneten Schnittstellen für die jeweiligen Medien und Medienleitungen (21). Von hier aus erfolgt mittels Verbindungsleitungen (25) eine Zuleitung zu einem roboterseitigen Leitungsanschluss (22) an der Kupplungseinrichtung (2). Figur 4 zeigt hierzu weitere Details.

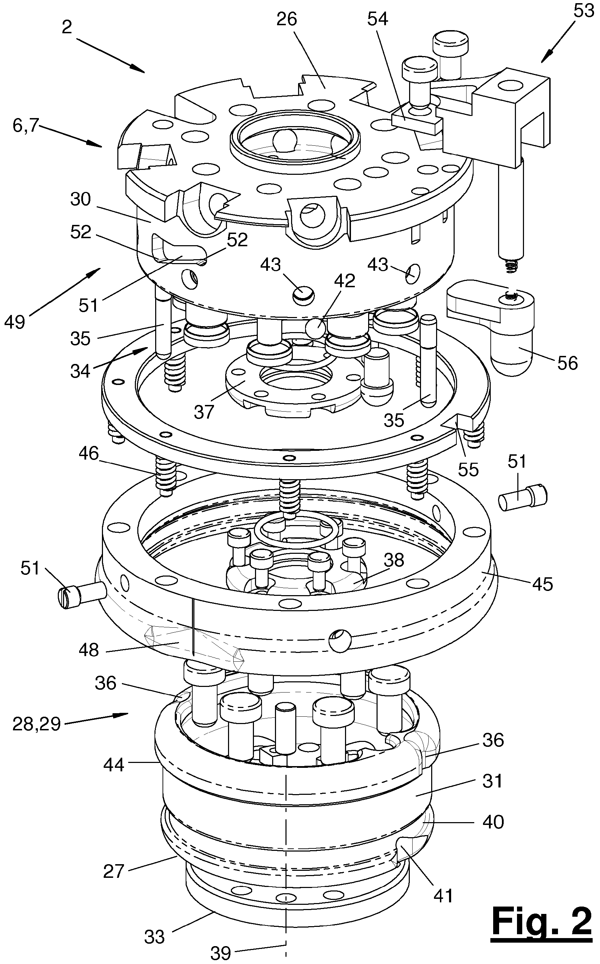

In Figur 2 bis 11 ist die erste Variante der Kupplungseinrichtung (2) dargestellt und wird nachfolgend erläutert.

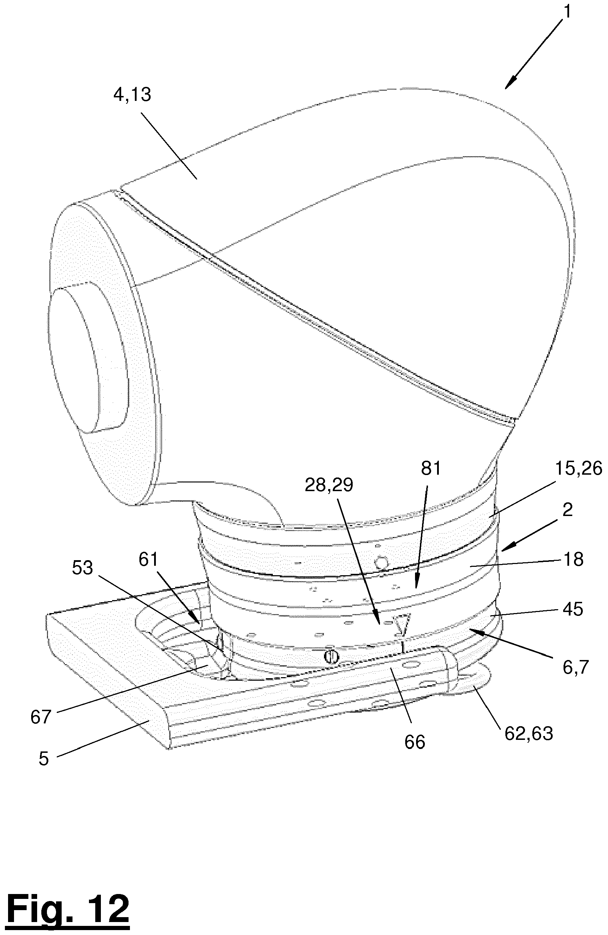

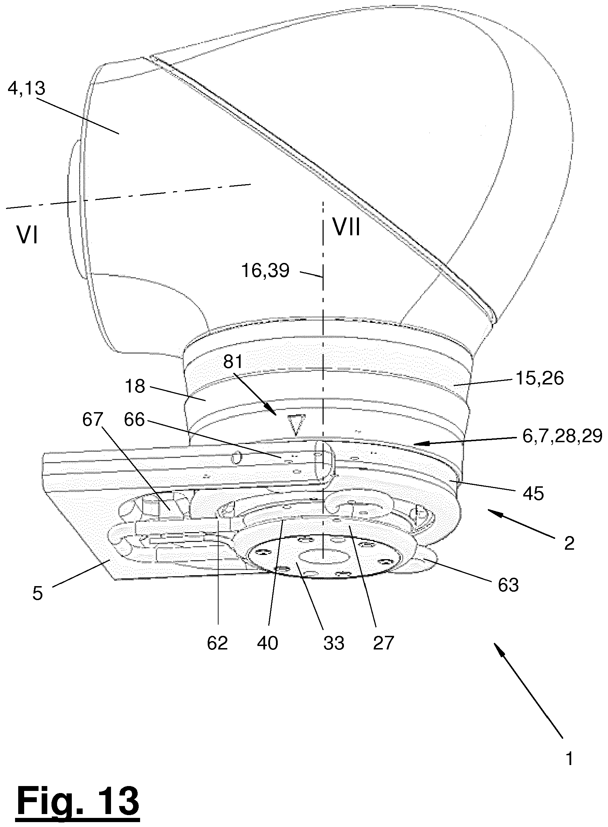

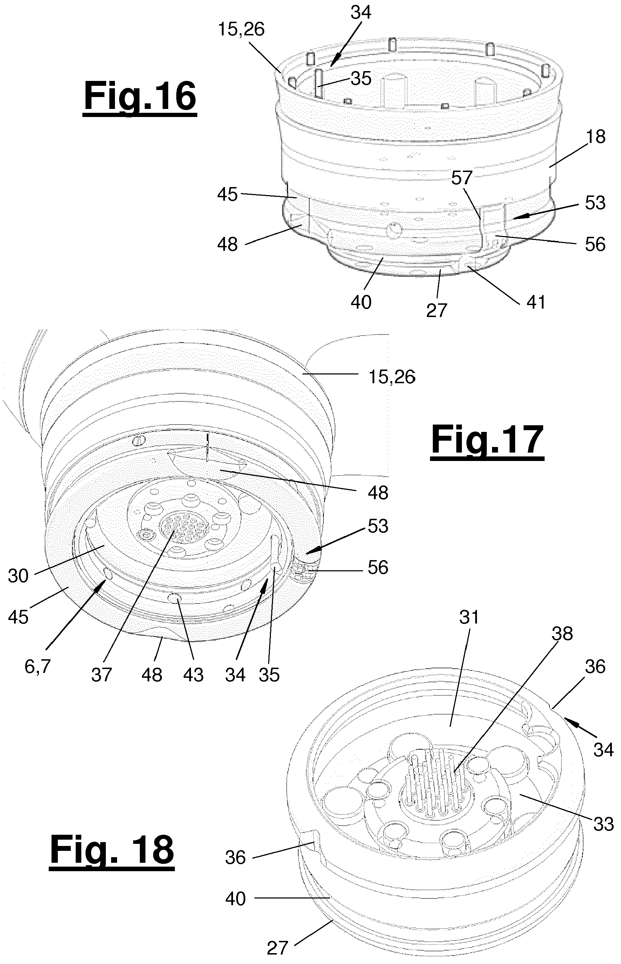

In Figur 12 bis 19 ist eine zweite Variante der Kupplungseinrichtung (2) mit einem anders ausgebildeten Abtriebselement (15) dargestellt. Das Abtriebselement (15) ist dabei Bestandteil der Kupplungseinrichtung (2) und wird insoweit als integrales Abtriebselement (15) bezeichnet. In diesem Fall erfolgt eine direkte Verbindung der ein oder mehreren roboterinternen Medienleitungen (21) mit dem roboterseitigen Leitungsanschluss (22) mit außenseitiger Abschirmung im Innenraum des hohlen integralen Abtriebselements (15). Weitere Einzelheiten hierzu werden nachfolgend beschrieben.

Die automatische Kupplungseinrichtung (2) weist mehrere, vorzugsweise zwei miteinander verbindbare Kupplungsteile (26,27) mit einer mechanischen Kupplung (28) und mit einer Medienkupplung (29) auf. Das roboterseitige Kupplungsteil (26) ist in den gezeigten Varianten mit dem standardisierten Abtriebselement (14) verbunden oder in das integrale Abtriebselement (15) integriert. Das werkzeugseitige Kupplungsteil (27) wird in beliebig geeigneter Weise, z.B. über einen Adapter (33), mit dem Werkzeug (3) fest oder lösbar verbunden.

Die mechanische Kupplung (28) weist ein roboterseitiges Kupplungselement (30) und ein werkzeugseitiges Kupplungselement (31) auf, die z.B. als Ringflansche mit koaxialer Anordnung und Ausrichtung zur Kupplungsachse (39) ausgebildet sind. Die Kupplungselemente (30,31) werden zum An- und Abkuppeln entlang der Kupplungsachse (39) bewegt und greifen beim Ankuppeln formschlüssig ineinander.

Bei dieser axialen An- und Abkuppelbewegung werden auch mediale Kupplungsmittel (37,38) der Medienkupplung (29) in und außer Kupplungseingriff gebracht. Die Kupplungsmittel (37,38) sind z.B. als axiale Steckverbindungen für elektrischen Strom und/oder Fluide ausgeführt. Die medialen Kupplungsmittel (37,38) werden von den ringförmigen Kupplungselementen (30,31) umgeben und sind in Kupplungsstellung geschützt in einem rundum geschlossenen Raum aufgenommen. Am werkzeugseitigen medialen Kupplungsmittel (38) ist ein Leitungsanschluss (23) für die weitere Leitungsverbindung zu den Verbrauchern am Werkzeug (3) vorhanden.

Die medialen Kupplungsmittel (37,38) können lösbar an den Kupplungselementen (30,31) angeordnet sein. Sie können bedarfsweise gewechselt, umgerüstet oder nachgerüstet werden. Sie können zudem modular ausgebildet sein und an unterschiedliche Arten und Kombinationen von Medien angepasst werden. Die medialen Kupplungsmittel (37,38) können hierfür z.B. einen austauschbaren Basisträger mit einer wählbaren Bestückung von Steck- und Medienverbindungen aufweisen.

Zwischen den mechanischen Kupplungselementen (30,31) wirkt eine Verriegelung (6), die mehrere bevorzugt formschlüssig miteinander in Eingriff bringbare Riegelelemente (42-44) aufweist und die mittels einer Betätigungseinrichtung (7) geöffnet und geschlossen werden kann. In den gezeigten Ausführungsbeispielen sind die Riegelelemente jeweils als Kugeln (42) in radialen, kanalartigen Kugelaufnahmen (43) am roboterseitigen Kupplungselement (30) und als radial vorspringende, vorzugsweise ringförmig umlaufende Schulter (43) am werkzeugseitigen Kupplungselement (31) ausgebildet. Am roboterseitigen Kupplungselement (30) können mehrere Kugeln (42) und Kugelaufnahmen (43) über den Umfang verteilt angeordnet sein.

Die Betätigungseinrichtung (7) wird durch eine Drehbewegung des Industrieroboters (4) um die Kupplungsachse (39) aktiviert. Sie öffnet und schließt dabei je nach Drehrichtung die Verriegelung (6). Die Betätigungseinrichtung (7) ist getrennt von den Riegelelementen (42-44) angeordnet. Sie ist relativ zu den Riegelelementen (42-44) beweglich an der Kupplungseinrichtung (2), insbesondere am roboterseitigen Kupplungsteil (26), vorzugsweise an dessen Kupplungselement (30), angeordnet. Die Betätigungseinrichtung (7) führt zum Öffnen und Schließen der Verriegelung (6) eine translatorische Bewegung aus, die vorzugsweise längs der Kupplungsachse (39) ausgerichtet ist und durch die Drehbewegung des Industrieroboters (4) um die Kupplungsachse (39) induziert wird.

Die Betätigungseinrichtung (7) weist einen Betätiger (45) auf, der mit dem roboterseitigen Kupplungselement (30) über einen Drehumsetzer (49) verbunden ist, welcher eine Drehbewegung des roboterseitigen Kupplungselements (30) in eine translatorische Bewegung des Betätigers (45) umsetzt. Der Betätiger (45) ist außenseitig auf dem roboterseitigen Kupplungselement (30) angeordnet und geführt. Der Betätiger (45) weist ferner eine Riegelaufnahme (47) für ein Riegelelement (42), insbesondere für eine Kugel, auf.

In den gezeigten Ausführungsbeispielen ist der Betätiger (45) als umlaufend geschlossener Betätigungsring ausgebildet, der mit seinem zylindrischen Innenmantel dicht an dem ebenfalls zylindrischen Außenmantel des roboterseitigen Kupplungselements (30) anschließt. Der Betätigungsring (45) wird durch den nachfolgend erläuterten Drehumsetzer (49) in Axialrichtung beweglich am Kupplungselement (30) gehalten. Am werkzeugseitigen Randbereich weist der Betätigungsring (45) an seinem Innenmantel eine Riegelaufnahme (47) auf, die in den gezeigten Ausführungsbeispielen als Kugelaufnahme und als umlaufende Ringnut ausgebildet ist. Sie ist gegenüber dem Ringrand ein kleines Stück axial distanziert. Am anderen Randbereich ist der Betätigungsring (45) über einen Kranz von Federbolzen (46) mit einem Stützring verbunden, der am Übergang des Ringflansches (30) in den plattenförmigen Flansch des Kupplungsglieds (26) angeordnet ist.

Die Betätigungseinrichtung (7) weist ferner eine Dreharretierung (53) für den Betätiger (45) auf. Diese wird vorzugsweises durch die Verlagerungsbewegung des Industrieroboters (4) aktiviert. Die Dreharretierung (53) ist vorzugsweise an einer oder beiden Endlagen des Drehumsetzers (49) wirksam.

Für die Funktion des Drehumsetzers (49) ist ferner eine Drehsperre (48) am Betätiger (45) vorgesehen, die zum An- und Abkuppeln mit einem externen Widerlager (66) zusammenwirkt. Das Widerlager (66) kann z.B. an den Werkzeughaltern (5) ausgebildet sein. In Figur 1 bis 15 und Figur 20 bis 25 sind verschiedene Ausführungsformen eines Werkzeughalters (5) dargestellt.

Der Drehumsetzer (49) weist vorzugsweise formschlüssig ineinander greifende Führungselemente (50,51) auf, mit denen die Drehung des Kupplungselements (30) in eine axiale Hubbewegung des Betätigers (45) umgesetzt wird. Der Drehumsetzer (49) kann ferner eine Raste (52) an einer oder beiden Endlagen haben, die eine Endlage definiert und einen gewissen mechanischen Rückhalt und Widerstand bietet. Die Raste kann außerdem bei der Betätigung des Drehumsetzers (49) durch den Industrieroboter (4) taktil erfasst werden und zur Funktionskontrolle der Betätigungseinrichtung (7) dienen. Die Raste (52) und die Dreharretierung (53) ergänzen einander.

In den gezeigten Ausführungsbeispielen ist der Drehumsetzer (49) als Kulissenführung ausgebildet, wobei die Führungselemente (50,51) als Führungsstift und Führungsbahn ausgebildet sind. Die Paarungen der Führungselemente (50,51) können mehrfach und am Umfang des ringförmigen Kupplungselements (30) verteilt angeordnet sein. Bevorzugt sind die Führungselemente (50) als radiale Führungsstifte ausgebildet und am Betätiger (45), insbesondere am Betätigungsring, angeordnet. Die als Führungsbahn, insbesondere Kulissenbahn, ausgebildeten Führungselemente (51) sind am Außenmantel des Kupplungselements (30) angeordnet und sind schräg zur Kupplungsachse (39) ausgerichtet. Die Raste (52) wird z.B. durch eine kalottenförmige Vertiefung an ein oder beiden Enden der Führungsbahn (51) gebildet. Figur 2, 3 und 14 zeigen diese Anordnung.

Die Drehsperre (48) wird in den gezeigten Ausführungsbeispielen von beidseitigen Abflachungen bzw. Schlüsselflächen am ringförmigen Mantel des Betätigers (45) gebildet. Das Widerlager (66) wird von parallelen Armen der Werkstückhalter (5) gebildet, welche plan an den Schlüsselflächen (48) anliegen und eine Drehung des Betätigungsrings (45) verhindern.

Bei der vorgenannten und vom Industrieroboter (4) über das Abtriebselement (14,15) induzierten Drehung des roboterseitigen Kupplungselements (30) wird auch das werkzeugseitige Kupplungselement (31) mitbewegt. Zum Ankuppeln werden die ringförmigen Kupplungselemente (30,31) formschlüssig ineinander gesteckt.

Die Kupplungselemente (30,31) weisen eine Drehsicherung (34) auf, die in Kupplungsstellung wirksam ist und sie drehschlüssig verbindet. Die Drehsicherung (34) wird von formschlüssig ineinander greifenden Sicherungsmitteln (35,36) an den Kupplungselementen (30,31) gebildet. Die Sicherungsmittel sind z.B. als axiale Stifte (35) am Innenmantel des roboterseitigen Kupplungselements (30) und als korrespondierende axiale Nuten (36) an der Außenkontur des werkzeugseitigen Kupplungselements (31) ausgebildet.

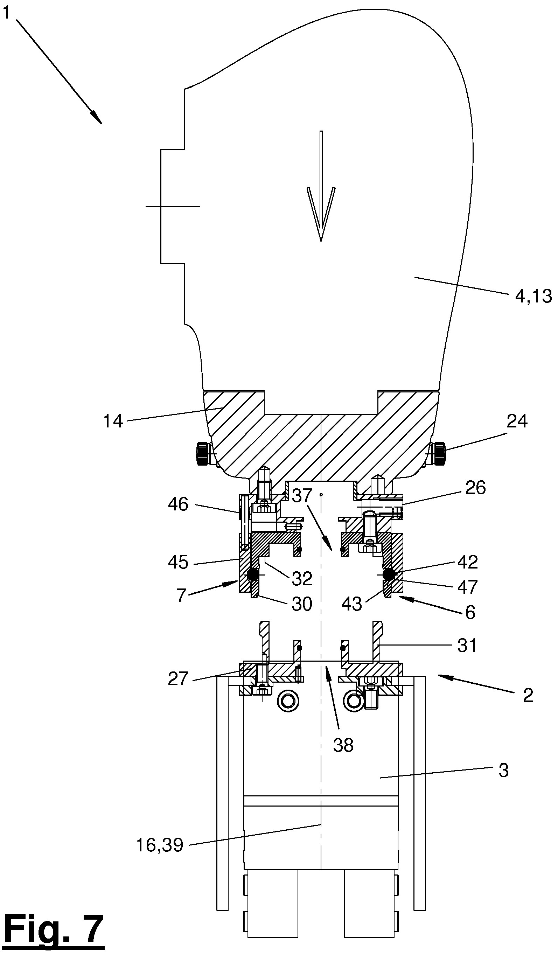

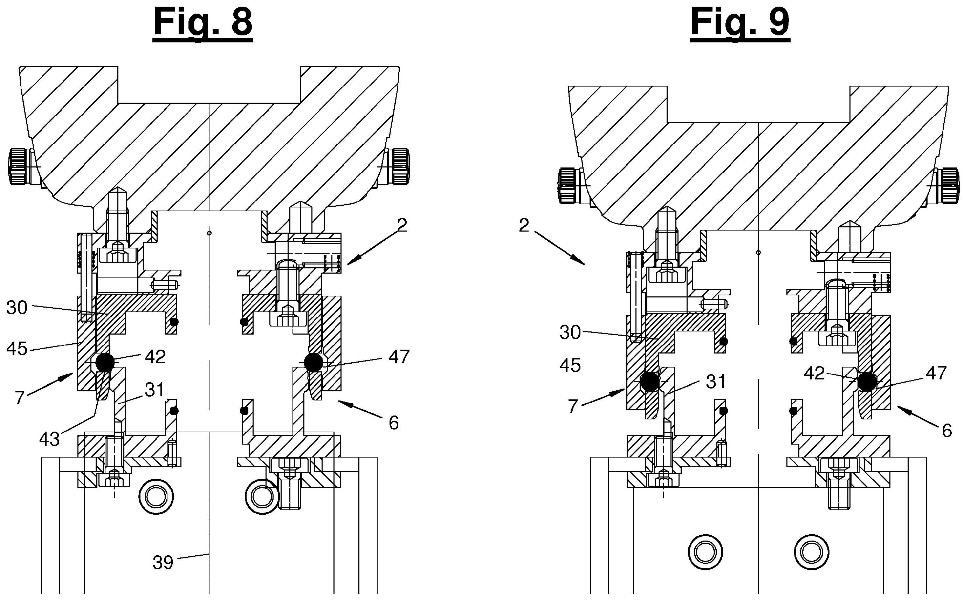

In Figur 7 bis 11 ist ein Ankuppelvorgang in mehreren Schritten bzw. Betriebsstellungen schematisch dargestellt. Die Kupplungseinrichtung (2) ist geöffnet, wobei das Werkzeug (3) mit seinem Kupplungsteil (27) am Werkzeughalter (5) in der nachfolgend beschriebenen Weise positioniert ist. Figur 7 zeigt eine Übersicht, in der auch ein Endglied (13) des Industrieroboters (4) und das Abtriebselement (14) mit dem roboterseitigen Kupplungsteil (26) dargestellt ist. In den anderen Figuren 8 bis 11 sind nur die Kupplungsteile (26,27) und deren Kupplungselemente (30,31) abgebrochen und vergrößert dargestellt.

Figur 7 zeigt die Ausgangsstellung mit vollkommen geöffneter Kupplungseinrichtung (2), wobei der Industrieroboter (4) sein Kupplungsteil (26) koaxial zum werkzeugseitigen Kupplungsteil (27) ausgerichtet hat. Die Verriegelung (6) und die Betätigungseinrichtung (7) sind geöffnet, wobei der Betätiger (45) seine untere Position einnimmt, in welcher die Kugeln (42) in die Kugelaufnahme (47) am Betätiger (45) eintauchen und dadurch von den innenseitigen Mündungen der Kugelaufnahme (43) zurückversetzt sind. Die Federbolzen (46) halten den Betätiger (45) in dieser unteren Position.

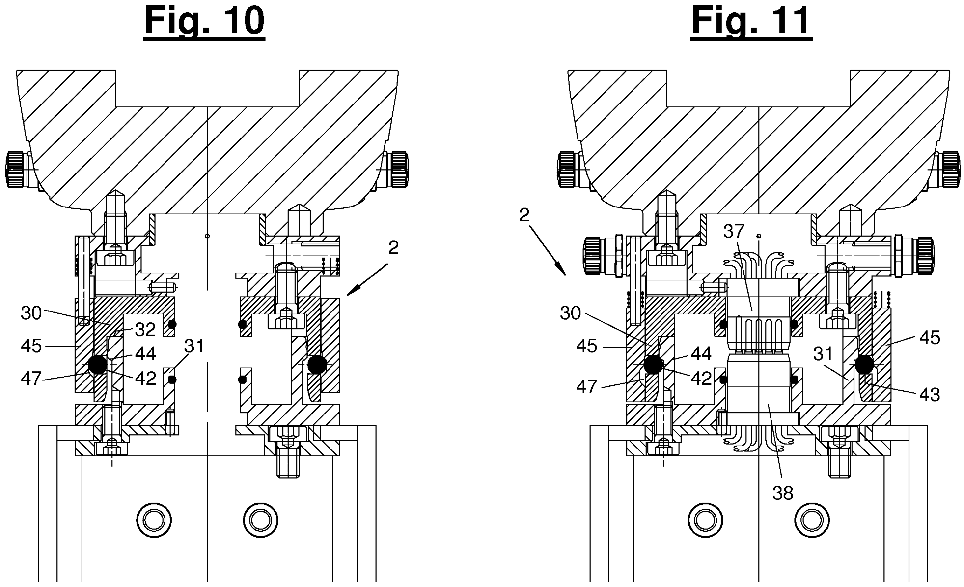

Gemäß Figur 8, 9 und 10 wird das roboterseitige Kupplungselement (30) über das werkzeugseitige Kupplungselement (31) gesteckt und gleitet mit seiner Innenwandung über die obere Ringschulter am Kupplungselement (31). Die unverlierbar in den Kugelaufnahmen (43) gehaltenen Kugeln (42) können in der erwähnten Weise in die Kugelaufnahme (47) ausweichen und erlauben ein Vorbeigleiten des Kupplungselements (31). Figur 10 zeigt die axiale Endstellung, in der die Kupplungselemente (30,31) maximal zusammengesteckt sind und eine Anschlagstellung einnehmen, in welcher das werkzeugseitige Kupplungselement (31) an einer Schulter oder einem Boden (32) des roboterseitigen Kupplungselements (30) anschlägt. Die Drehsicherung (34) ist geschlossen.

Anschließend wird gemäß Figur 11 die Betätigungseinrichtung (7) in der vorbeschriebenen Weise über eine Drehung der drehschlüssig verbundenen Kupplungselemente (30,31) aktiviert. Der Betätiger (45) wird dabei durch den Drehumsetzer (49) axial verfahren, wobei die Kugeln (42) aus der Kugelaufnahme (47) verdrängt und in formschlüssigen Eingriff unter die Schulter (44) am Kupplungselement (31) radial verschoben werden. Der Betätiger (45) drückt dabei mit seiner glatten bzw. zylindrischen Innenwand außenseitig gegen die Kugeln (42) und hält diese in der Kupplungs- und Verriegelungsposition. Figur 11 zeigt auch die Schließstellung der Medienkupplung (29) mit dem bevorzugt formschlüssigen Ankuppeln der medialen Kupplungsmittel (37, 38).

Zum Abkuppeln dreht der Industrieroboter (4) die Kupplungselemente (30,31) in Gegenrichtung, wobei der Drehumsetzer (49) eine entgegengesetzte translatorische Bewegung des Betätigers (45) in die Stellung gemäß Figur 10 erzeugt. Der Industrieroboter (4) kann dann sein Kupplungsteil (26) abheben, wobei das Werkzeug (3) und sein Kupplungsteil (27) am Werkzeughalter (5) zurückgehalten werden.

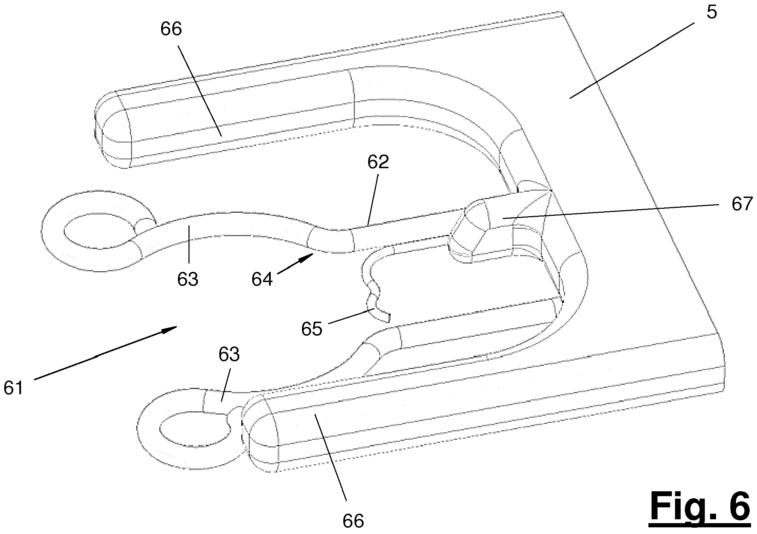

Wie Figur 1 und 6 einer ersten Ausführungsform verdeutlichen, weisen die Werkzeughalter (5) ein Gestell (60) und am oberen Ende eine Aufnahmeöffnung (61) auf, die zur formschlüssigen Aufnahme von einem werkzeugseitigen Kupplungsteil (27) und dem damit verbunden Werkzeug (3) dient. In der Aufnahmeöffnung (61) sind Halteelemente (62,65) und ein Anschlag (64) angeordnet, die mit einem translatorischen Haltemittel (40) und einem rotatorischen Haltemittel (41) an einem aufgenommenen Kupplungsteil (27) zusammenwirken. Hierdurch wird dessen translatorische Position in den drei Raumachsen und dessen rotatorische Position um die Kupplungsachse (39) gesichert. An der Aufnahmeöffnung (61) ist ferner ein Betätigungsmittel (67) für die Dreharretierung (53) angeordnet.

Das Halteelement (62) ist in der ersten Ausführungsform z.B. als Haltegabel mit zwei ausgebauchten, federnden Gabelarmen (63) ausgebildet, die das werkzeugseitige Kupplungsteil (27) formschlüssig umgreifen und auch den Anschlag (64) für dessen translatorische Einführbewegung bilden. Die vom Gestell (60) zunächst gerade und in Parallellage ausgehenden Gabelarme (63) sind anschließend nach außen zu einer Rundung gebogen und am freien Ende zu Angleitaugen verrundet. Die bauchigen Gabelarme (63) greifen dadurch formschlüssig in eine Ringnut am Kupplungsteil (27) ein, welche das translatorische Haltemittel (40) bildet. Sie hintergreifen dabei das Kupplungsteil (27) beidseitig und an dessen Hinterseite und halten es federnd gegen die translatorische Einführrichtung fest. Die Gabelarme (63) halten das Kupplungsteil (27) in Richtung der Raumachsen fest und bilden zugleich durch ihre rückseitige Verjüngung den Anschlag (64), welcher der Gabelöffnung gegenüberliegt. Das vorerwähnte Widerlager (66) wird von zwei parallelen und etwas höher angesetzten, weiteren Gabelarmen gebildet. Diese Gabelarme haben eine gerade Erstreckung und wirken jeweils an ihrer ebenen Innenseite mit der Drehsperre (48), insbesondere den Schlüsselflächen, zusammen.

Figur 6 zeigt außerdem das Halteelement (65), welches mit dem rotatorischen Haltemittel (41) am werkzeugseitigen Kupplungsteil (27) zusammenwirkt und dessen Drehstellung fixiert. Dies betrifft die Drehstellung am Ende der Kupplungsdrehung zur Aktivierung der Betätigungseinrichtung (7). Der Industrieroboter (4) positioniert hierfür die geschlossene Kupplungseinrichtung (2) entsprechend beim Anfahren des Werkzeughalters (5). Das Halteelement (65) ist z.B. als Sicherungsbügel ausgebildet und befindet sich im Bereich des Anschlags (64). Das rotatorische Haltemittel (41) wird z.B. von einer radialen Ausnehmung am werkzeugnahen Rand des Kupplungsteils (27) bzw. des Kupplungselements (31) gebildet. Figur 2 zeigt die Anordnung.

Die vorerwähnte Dreharretierung (53) am Betätiger (45) weist ein betätigerseitiges Arretiermittel (54) und ein am Kupplungselement (30) angeordnetes Arretiermittel (55) auf. Die Arretiermittel (54,55) wirken vorzugsweise formschlüssig zusammen. Sie können zwischen einer Arretier- und Freigabeposition mittels eines Auslöser (56) bewegt werden. Der Auslöser (56) ist an der Außenseite des Betätigers (45) angeordnet und wird über das Betätigungsmittel (67) am Werkzeughalter (5) aktiviert bzw. betätigt.

Im ersten Ausführungsbeispiel von Figur 1 bis 11 ist das Arretiermittel (54) als längs der Kupplungsachse (39) verschiebbare Arretiernase (54) ausgebildet, die vom federbelasteten Auslöser (56) bei dessen Anschlag am Betätigungsmittel (67) axial verschoben wird. Die Arretierung (53) wird dadurch in der Aufnahmeposition am Werkzeughalter (5) geöffnet. Dieser Öffnungsstellung erlaubt es dem Industrieroboter (4) an- und abzukuppeln sowie die Betätigungseinrichtung (7) zu aktivieren. Nach Öffnung der Verriegelung (6) hebt der Industrieroboter (4) das Kupplungsteil (26) axial ab, wobei der Auslöser (56) und das Betätigungsmittel (67) getrennt werden und die Dreharretierung (53) durch Federkraft wieder einrastet und den Betätiger (45) gegenüber dem Kupplungselement (30) arretiert und sichert. Beim Ankuppeln an ein bereitgehaltenes Werkzeug (3) wirkt das Betätigungsmittel (67) wieder auf den Auslöser (56) ein und öffnet die Dreharretierung (53).

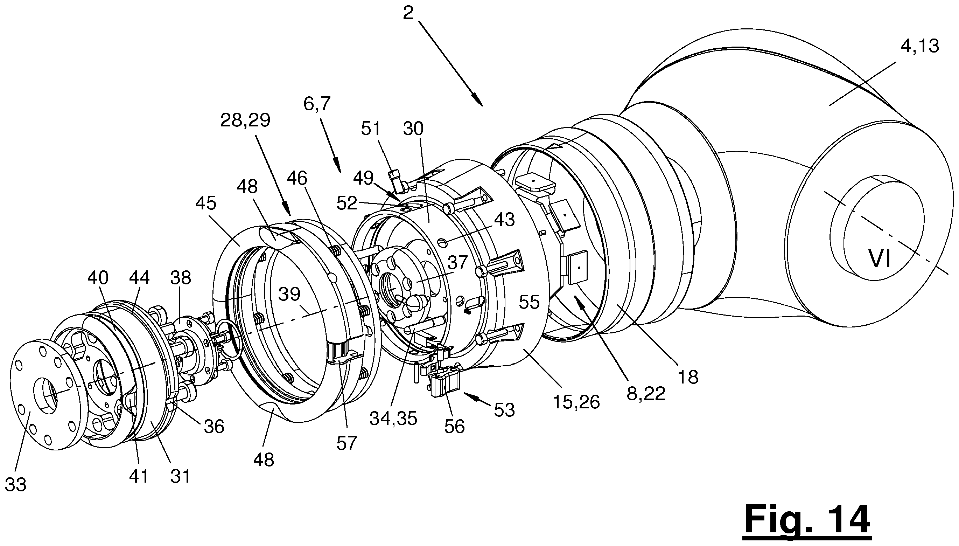

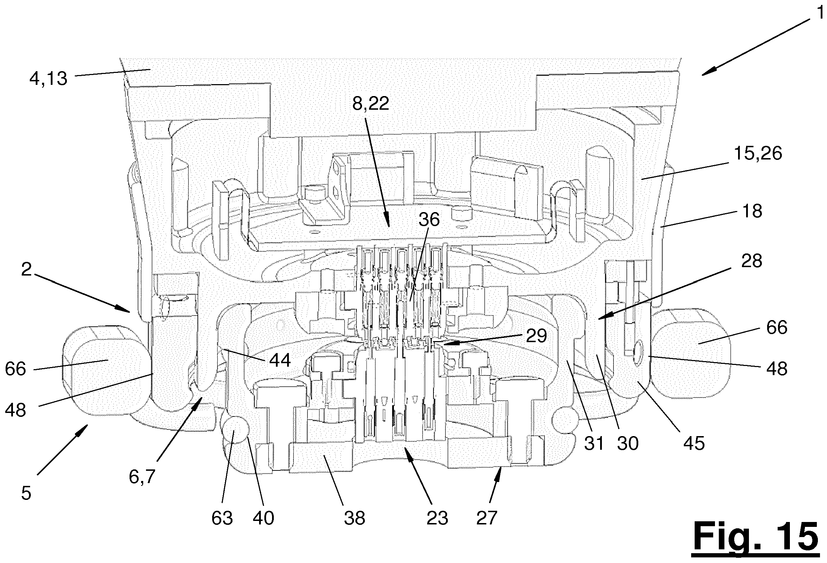

Die zweite Ausführungsvariante von Figur 12 bis 19 stimmt weitgehend mit dem ersten Ausführungsbeispiel überein. Unterschiede bestehen hinsichtlich der integralen Ausbildung des Abtriebselements (15) und des roboterseitigen Kupplungsteils (26). Figur 14 und 15 zeigen in einer Explosionsdarstellung und in einem Querschnitt die dadurch erzielbare Verkürzung und kompakte Form der Kupplungseinrichtung (2) und der Leitungsführung (8) .

Bei dem ersten Ausführungsbeispiel von Figur 1 bis 11 werden die Verbindungsleitungen (25) durch eine am roboterseitigen Kupplungsteil (26) angebaute Schutzverkleidung (18) abgedeckt, die als ausgebauchtes ringförmiges Gehäuse ausgebildet ist. Die gerundete Schutzabdeckung sorgt auch für den bei einer MRK-Applikation erforderlichen Unfall- und Kollisionsschutz. In der zweiten Ausführungsvariante gemäß Figur 12 bis 19 mit dem integralen Abtriebselement (15) kann die Schutzverkleidung (18) wesentlich filigraner ausgebildet sein und ist z.B. als ringförmige oder konische Manschette ausgeführt.

Die Verriegelung (6) und die Betätigungseinrichtung (7) können in der zweiten Variante gleich oder ähnlich wie im ersten Ausführungsbeispiel gestaltet sein. Figur 15 bis 18 zeigen diese Ausbildung, die in gleicher Weise auch beim ersten Ausführungsbeispiel eingesetzt werden kann.

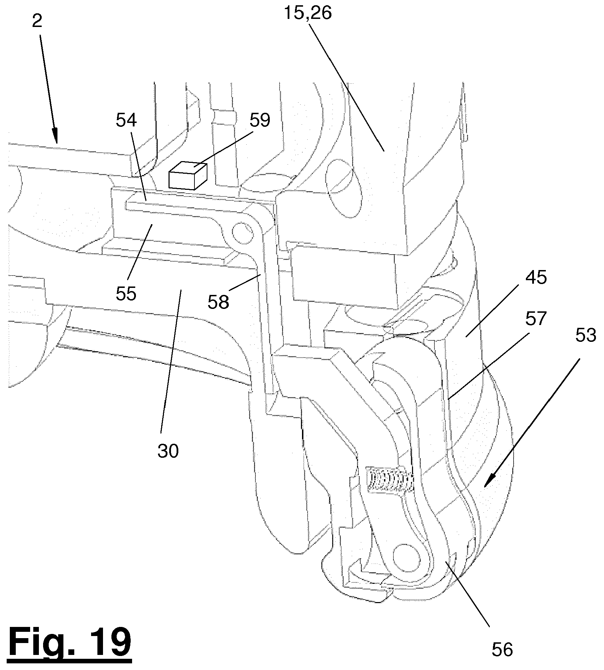

Die zweite Variante unterscheidet sich von der ersten auch in der Ausbildung der Dreharretierung (53). Der Auslöser (56) ist in der zweiten Variante in einer radial und nach unten offenen Ausnehmung (57) des Betätigungsrings (45) eingelassen. Der Auslöser (56) ist hierbei als Doppelanordnung von aneinander gelagerten und federbelasteten Schwenkarmen ausgebildet und wirkt mit einem Übertrager (58) zusammen, der z.B. als L-förmiger Schwenkhebel mit Lagerung am Betätiger (45) ausgeführt ist. Der eine Hebelarm wird vom Auslöser (56) belastet, wobei der andere Hebelarm eine Arretiernase (54) bildet, die mit einem Arretieranschlag (55) am Kupplungselement (30) oder Kupplungsteil (26) zusammenwirkt. Figur 12 und 19 zeigen die Anordnung und verdeutlichen außerdem die Anordnung einer Abfrage (59), z.B. eines Näherungssensors, an der Arretiernase (54). Hierüber kann im Automatikbetrieb festgestellt werden, ob die Arretierfunktion erfüllt ist.

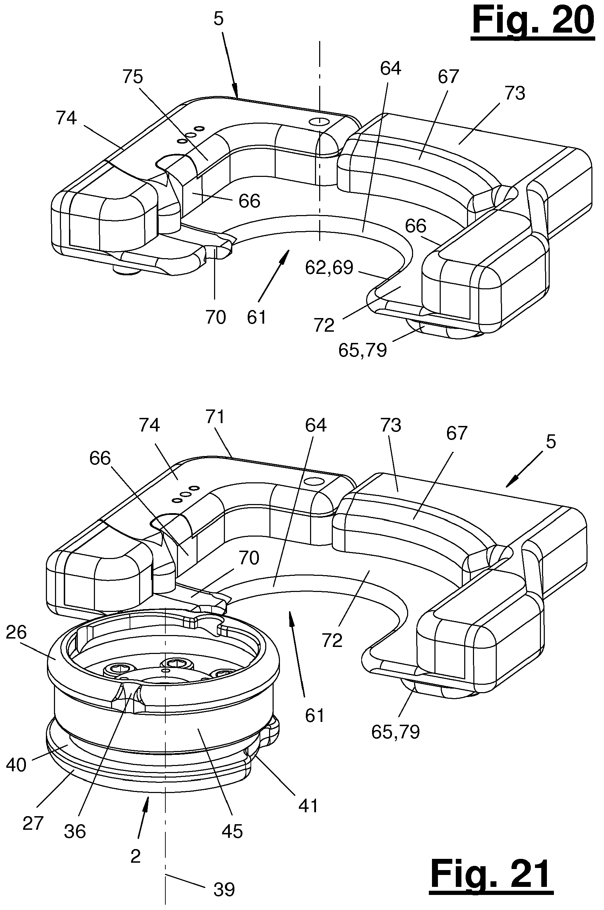

Figur 20 bis 27 zeigen eine andere Ausführungsform des Werkzeughalters (5) und eine hierauf adaptierte weitere Variante der Kupplungseinrichtung (2).

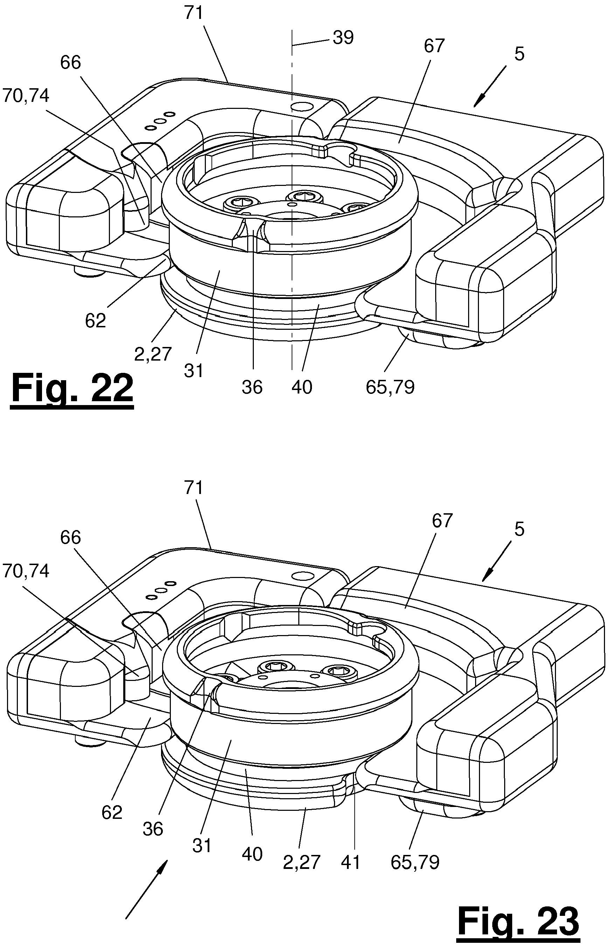

Der Werkzeughalter (5) weist einen Korpus (71) mit einer dünnwandigen und plattenartigen Basis (72) sowie einem randseitigen gebogenen Kragen (73) auf. Der Korpus (71) ist an dem hier nicht dargestellten Gestell (60) angeordnet. Die Aufnahmeöffnung (61) für das werkzeugseitige Kupplungsteil (27) ist in der Basis (72) in Form eines randseitig offenen Ausschnitts ausgebildet. Das Halteelement (62) und der rückwärtige Anschlag (64) werden in dieser Ausführungsform durch den Öffnungs- bzw. Plattenrand (69) der Basis (72) gebildet. Der entsprechend dünnwandige Plattenrand (69) kann in das translatorische Haltemittel (40), insbesondere die Ringnut, am Kupplungsteil (27) formschlüssig eingreifen. Hierdurch wird die translatorische Position des aufgenommenen werkzeugseitigen Kupplungsteil (27) in Richtung der Kupplungsachse (39) und der durch einen Pfeil in Figur 23 markierten Einführrichtung gesichert.

Die Sicherung entgegen der Einführrichtung und die Sicherung der Drehstellung um die Kupplungsachse (39) erfolgen durch ein Halteelement (65) und einen Gegenhalter (70), wobei das Halteelement (65) mit einem rotatorischen Haltemittel (41) zusammenwirkt. Diese Teile (41,65,70) sind anders als in der ersten Ausführungsform ausgebildet.

Das rotatorische Haltemittel (41) ist als im Wesentlichen tangentiale Ausnehmung ausgebildet. Diese weist einen vom Außenumfang radial zurückversetzten tangentialen Bereich (76) auf, der an beiden Enden radial vorspringende Bereiche (77) aufweist. Der eine in Einführrichtung vorn liegende Bereich oder Vorsprung (77) bildet im Zusammenwirken mit dem Halteelement (65) einen Anschlag (78).

Das Halteelement (65) ist an der Unterseite der Basis (72) angeordnet und befindet sich randseitig am vorderen Ende der Aufnahmeöffnung (61). Das Halteelement (65) weist einen mit einer radialen Richtungskomponente vorspringenden Sperrfinger (79) auf, der mit dem Bereich (77) bzw. Anschlag (78) zusammenwirkt und das Kupplungselement (27) im abgekuppelten Zustand am Verlassen der Aufnahmeöffnung (61) formschlüssig hindert.

Der Gegenhalter (70) ist an der anderen Seite der Aufnahmeöffnung (61) und dem Sperrfinger (79) im Wesentlichen gegenüberliegend angeordnet. Der Gegenhalter (70) ist in der Basis (72) aufgenommen und ist als eine mit radialer Richtungskomponente in die Aufnahmeöffnung (61) vorspringende Haltenase ausgebildet. Diese ist an einem abgewinkelten und mit einer Feder belasteten Federarm (74) angeordnet und greift in der federbeaufschlagten Wirkstellung bzw. Sperrstellung formschlüssig in die Ringnut (40) ein. Der Federarm (74) ist um eine in Figur 20 gezeigte Achse am Korpus (71) schwenkbar gelagert. Der Gegenhalter (70) und der Federarm (74) drücken mit Federkraft das werkzeugseitige Kupplungsteil (27) gegen das Halteelement (65) und dessen Sperrfinger (79). Hierdurch wird dessen Rückhalte- und Anschlagfunktion gesichert.

Der Kragen (73) umgibt mit radialem Abstand die Aufnahmeöffnung (61) und bildet an seiner Innenseite die Widerlager (66) für die Drehsperre (48) am Betätiger (45) sowie das Betätigungsmittel (67) für die Dreharretierung (53) am roboterseitigen Kupplungsteil (26) aus. Der Federarm (74) weist ein Kragenteil (75) auf, welches einen drehbeweglichen Teil des Kragens (73) bildet und an dem das eine Widerlager (66) angeordnet ist. Die Widerlager (66) sind wie in der ersten Ausführungsform als ebene Flächen ausgebildet, die die Drehsperren (48) bzw. Schlüsselflächen am Betätiger (45) formschlüssig festhalten.

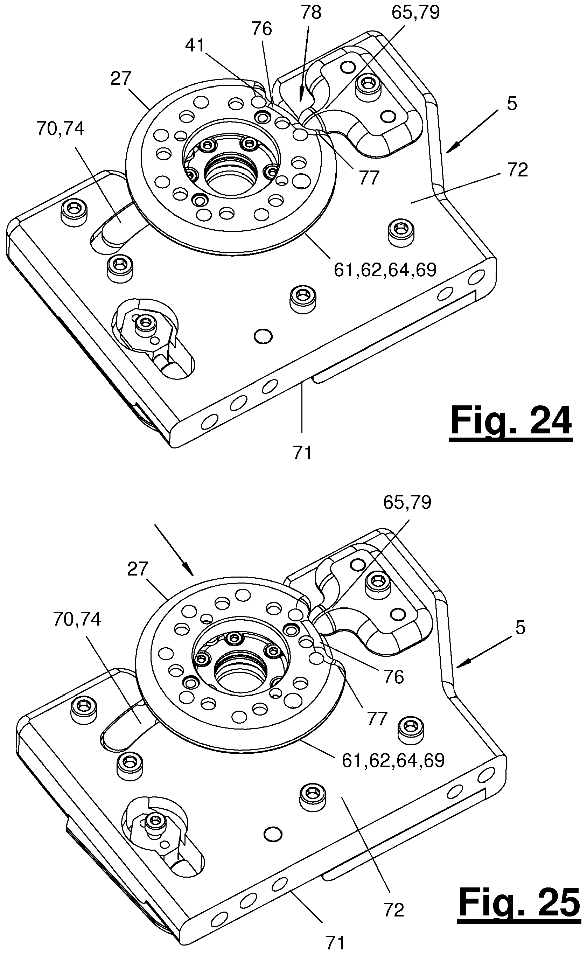

Figur 20 zeigt den leeren Werkzeughalter (5). In Figur 21 ist der Werkzeughalter (5) mit einem angenäherten und im Einfahren begriffenen werkzeugseitigen Kupplungsteil (27) dargestellt. Das angekuppelte roboterseitige Kupplungsteil (26) sowie das Werkzeug und der Industrieroboter (4) sind der Übersicht halber nicht dargestellt. In Figur 23 ist das gerade eingeführte Kupplungsteil (27) in Draufsicht und in Figur 25 in zugehöriger Unteransicht dargestellt.

Beim Einfahren richtet der Industrieroboter (4) die geschlossene Kupplungseinrichtung (2) derart um die Kupplungs- und Abtriebsachse (16,39) auf, dass der tangentiale Bereich (76) der Ausnehmung (41) im Wesentlichen parallel zur Einführrichtung ausgerichtet ist und den stationären Sperrfinger (79) passieren kann. Bei der Einfahrbewegung wird außerdem der Gegenhalter (70) und der Federarm (74) zurückgedrängt. Sobald die Anschlagstellung des Kupplungsteils (27) in der Aufnahmeöffnung (61) erreicht ist, dreht der Roboter die drehschlüssig verbundenen Kupplungsteile (26,27) derart, dass die Verriegelungsstellung gemäß Figur 22 und 24 eingenommen wird, wobei der Sperrfinger (79) am Vorsprung (77) anliegt und den besagten Anschlag (78) bildet, der das Kupplungsteil (27) in der Aufnahmeöffnung (61) und am Werkzeughalter (5) festhält.

Bei der Drehbewegung wird die Verriegelung (6) in der vorbeschriebenen Weise durch die Betätigungseinrichtung (7) und den drehfest gehaltenen Betätiger (45) geöffnet. Der Industrieroboter (4) kann dann vom gehaltenen Kupplungsteil (27) und in Achsrichtung (39) vom Werkzeug abkuppeln. Dabei wird der Federarm (74) mit seinem Kragenteil (75) freigebgeben und kann durch seine Rückstellfeder die Haltenase (70) gegen das Kupplungsteil (27) drücken. Die Angriffsstelle kann in Einführrichtung hinter der Kupplungsachse (39) liegen, so dass der Gegenhalter (70) bzw. die Haltenase ggf. zusätzlich zum Halteelement (65) bzw. Anschlag (78) einen formschlüssigen Rückhalt für das Kupplungsteil (27) entgegen der Einführrichtung bildet.

Zudem wird durch die federnde beidseitige Einspannung zwischen dem Halteelement (65) und dem Gegenhalter (70) die Drehstellung des abgekuppelten Kupplungsteils (27) gesichert. Durch den einstellbaren und federbelasteten Rückhalt kann der Werkzeughalter (5) mit beliebigen räumlichen Ausrichtungen seiner Aufnahmeöffnung (61) montiert werden, z.B. mit vertikaler oder schräger Öffnungslage.

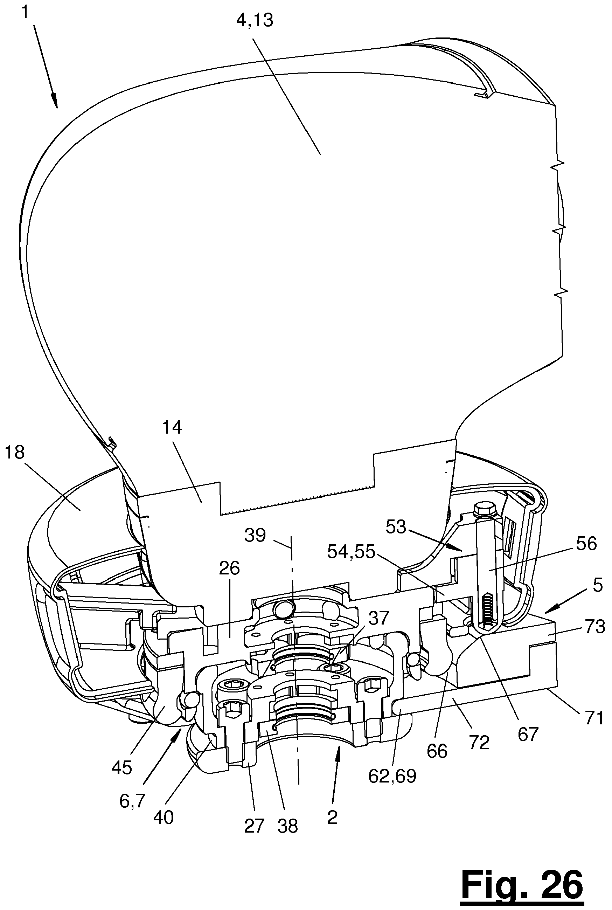

Figur 26 zeigt im Halbschnitt die aufgebrochene Kupplungseinrichtung (2) am Werkzeughalter (5). Hier ist auch die Anschlagstellung des Auslösers (56) der Dreharretierung (53) am Betätigungsmittel (67) dargestellt. Die Ausbildung und Funktion der Dreharretierung (55) mit den Arretiermitteln (54,55) kann die gleiche wie bei der ersten Variante gemäß Figur 1 bis 5 sein.

Figur 26 verdeutlicht außerdem eine Kupplungsstellung beim erneuten Ankuppeln des Industrieroboters (4) an das am Werkzeughalter (5) aufgenommene Kupplungsteil (27). Die Roboterbewegung zum Öffnen und Schließen der Kupplungseinrichtung (2) und der Verriegelung (6) erfolgt entlang der Kupplungsachse (39), wobei beim Ankuppeln die Dreharretierung (53) in der vorbeschriebenen Weise gelöst wird und dann nach drehschlüssiger Verbindung der Kupplungsteile (26,27) eine gemeinsame Drehbewegung durch das Abtriebselement (14) um die Kupplungsachse (39) ermöglicht. Hierbei findet ein Rückdrehen in die in Figur 23 und 25 gezeigte Freigabestellung statt, so dass der Industrieroboter (4) das angekuppelte Kupplungsteil (27) nebst Werkzeug entgegen der Einführrichtung wieder aus dem Werkzeughalter (5) herausziehen kann.

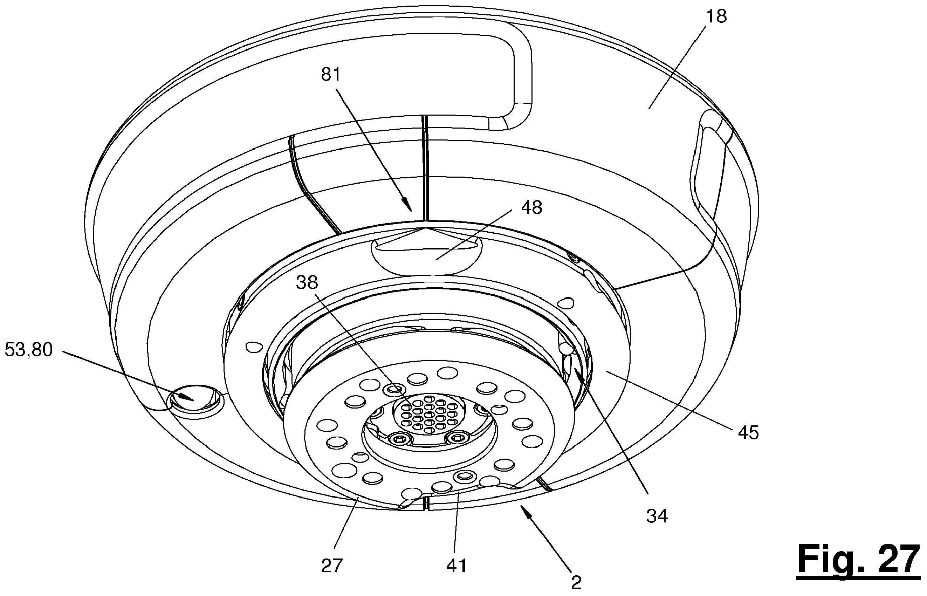

Figur 27 zeigt die geschlossene Kupplungseinrichtung (2) mit der Schutzverkleidung (18) in einer perspektivischen Unteransicht und verdeutlicht die Anordnung einer Notentriegelung (80) und einer optischen Anzeige (81) für den korrekten angekoppelten Zustand.

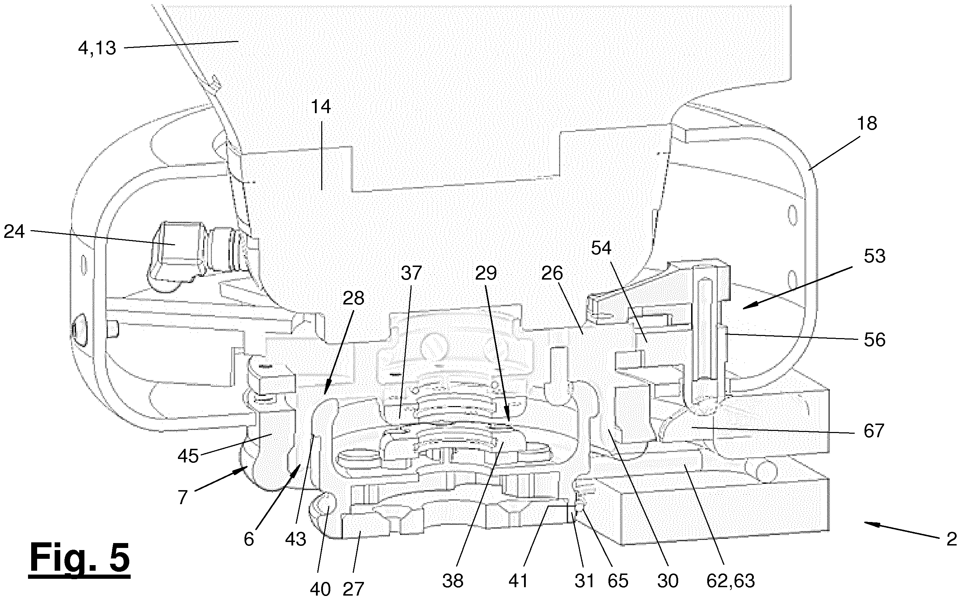

Die Dreharretierung (53) und der Auslöser (56) sind gemäß Figur 5 und 26 innerhalb der Schutzverkleidung (18) angeordnet, wobei die Spitze des Auslösers (56) in oder durch eine Öffnung an der Unterseite der Schutzverkleidung (18) ragt. Hierdurch ist der Auslöser (56) im Bedarfsfall manuell von außen zugänglich und kann zum Öffnen der Dreharretierung (53) eingedrückt werden. Dies ermöglicht ein anschließendes Öffnen und Entriegeln der Kupplungseinrichtung (2). Hierzu werden die drehschlüssig verbundenen Kupplungsteile (26,27) bei festgehaltenem Betätiger (45) gedreht und die Verriegelung (6) in der vorbeschriebenen Weise geöffnet.

Die Anzeige (81) wird von einer Markierung an der Schutzverkleidung (18) gebildet, die mit einer Gegenmarkierung am Betätiger (45), z.B. mit der Drehsperre bzw. Schlüsselfläche (48), zusammenwirkt. Die Schutzverkleidung (18) wird bei der Drehbewegung des Abtriebselements (14) zum Öffnen und Schließen der Verriegelung (6) mitbewegt, wobei die besagte Markierung gegenüber der Schlüsselfläche (48) verdreht wird. Das richtige Winkelmaß der Drehung und die korrekte Endstellung werden durch die besagte Anzeige (81) für einen Werker optisch signalisiert. Die Anzeige (81) kann alternativ mit einer Sensorik, z.B. der Abfrage (59), ergänzt sein und die korrekte oder falsche Drehstellung an den Industrieroboter (4) und ggf. über dessen Robotersteuerung an eine externe Anzeige, z.B. einen Monitor, übermitteln.

Der in Figur 1 näher dargestellte Industrieroboter (4) weist mehrere, z.B. drei, vier oder mehr, bewegliche und miteinander verbundene Roboterglieder (9-13) auf. Er hat ferner mehrere, z.B. fünf, sechs, sieben oder mehr, angetriebene Roboterachsen (I-VII). Diese können rotatorisch und/oder translatorisch sein und in beliebiger Zahl und Konfiguration vorliegen. Die Roboterglieder (9-13) sind vorzugsweise gelenkig und über drehende Roboterachsen (I-VII) miteinander und mit einem Untergrund verbunden. Der Sockel (9) kann den Medienanschluss (20) ggf. auch die Robotersteuerung (19) aufnehmen. Es ist ferner möglich, dass einzelne Roboterglieder (11,12) mehrteilig und in sich beweglich, insbesondere um die Längsachse verdrehbar, ausgebildet sind.

Im gezeigten Ausführungsbeispiel ist der Industrieroboter (4) als Gelenkarm- oder Knickarmroboter ausgebildet und weist sieben angetriebene Roboterachsen bzw. Bewegungsachsen (I-VII) auf. Die Roboterachsen (I-VII) sind mit der Robotersteuerung (19) verbunden und können gesteuert und ggf. geregelt werden. Der Industrieroboter (4) hat vorzugsweise eine oder mehrere kraftgesteuerte oder kraftgeregelte Roboterachsen (I - VII).

Der Industrieroboter (4) weist ein mit einem Untergrund über den Sockel (9) verbundenes Basisglied (10) und das vorerwähnte Endglied (13) sowie zwei mehrteilige und in sich mittels Achsen (III) und (V) verdrehbare Zwischenglieder (11,12) auf. Die Zahl der Zwischenglieder (11,12) kann alternativ kleiner oder größer sein. In weiterer Abwandlung können einzelne oder alle Zwischenglieder (11,12) in sich drehfest und ohne zusätzliche Achse ausgebildet sein. Die Roboterglieder (9-13) können eine gerade oder gemäß Figur 1 abgewinkelte Form haben.

Der taktile Industrieroboter (4) weist eine zugeordnete, vorzugsweise integrierte Sensorik (17) zur Erfassung von außen einwirkender mechanischer Belastungen, insbesondere Kräfte und/oder Momente, auf. Die Sensorik (17) ist mit der Robotersteuerung (19) signaltechnisch verbunden. Sie ist vorzugsweise in den Industrieroboter (4), insbesondere in dessen Roboterglieder (9-13) integriert. Sie kann alternativ an anderer Stelle, z.B. an seinem Abtriebselement (14,15) oder am Werkzeug (3) angeordnet sein. Die Sensorik (17) kann einen oder mehrere Sensoren, insbesondere Kraftsensoren und/oder Momentensensoren und ggf. Weg- oder Positionssensoren aufweisen.

Die Roboterachsen (I-VII) weisen jeweils ein Achslager, z.B. ein Drehlager bzw. ein Gelenk, und einen hier zugeordneten und integrierten steuerbaren, ggf. regelbaren Achsantrieb, z.B. Drehantrieb, auf. Außerdem können die Roboterachsen (I-VII) eine steuer- oder schaltbare Bremse und die erwähnte ggf. redundante Sensorik (17) zur Detektion von extern einwirkenden mechanischen Belastungen haben. Die in Figur 1 schematisch angedeutete integrierte Sensorik (17) kann einen oder mehrere Sensoren an jeweils einer oder mehreren Roboterachsen (I-VII) aufweisen.

Der Industrieroboter (4) kann eine oder mehrere nachgiebige Roboterachsen (I-VII) bzw. nachgiebige Achsantriebe mit einer Nachgiebigkeitsregelung haben. Die Nachgiebigkeitsregelung kann eine reine Kraftregelung oder eine Kombination aus einer Positions- und einer Kraftregelung sein. Eine solche nachgiebige Roboterachse (I-VII) ist für die Detektion der im Montageprozess auftretenden Reaktionskräfte und/oder Reaktionsmomente in Verbindung mit der jeweils aktuellen Roboter- oder Achsposition einsetzbar und erlaubt eine prozessgerechte Reaktion auf evtl. Abweichungen der detektierten Werte von einer Vorgabe.

Die vorgenannte Kraftsteuerung oder Kraftregelung der Roboterachsen (I-VII) bezieht sich auf die Wirkung nach außen am Abtriebselement (14,15) des Endglieds (13) sowie auf die dort einwirkenden Reaktionskräfte. Roboterintern findet an den drehenden Achsen oder Achsantrieben eine Momentensteuerung oder Momentenregelung statt.

Der taktile Industrieroboter (4) kann verschiedene Betriebsmodi mit unterschiedlichen Steifigkeiten bzw. Nachgiebigkeiten seiner Roboterachsen (I-VII) haben. Dies kann z.B. ein Handführmodus, ein Positionier- oder Suchmodus und ein Steifigkeitsmodus sein. Zwischen den Betriebsmodi kann bedarfsweise umgeschaltet werden.

Der bevorzugt taktile Industrieroboter (4) ist für eine MRK ausgerüstet. Seine nachgiebige Roboterachse(n) (I-VII) vermeiden Unfälle mit einem Werker und Crashs mit Gegenständen im Arbeitsbereich durch Kraftbegrenzung und ggf. Stillstand oder federndes Ausweichen im Fall unverhergesehener Kollisionen. Der taktile Industrieroboter (4) kann dadurch auch für eine MRK bei der Teilautomatisierung eingesetzt werden. Der MRK-taugliche Industrieroboter (4) kann einen Berührungskontakt mit dem menschlichen Körper oder anderen Hindernissen detektieren und hierauf reagieren. Er kann dabei z.B. stehen bleiben oder sich ggf. auch von der Kontaktstelle entfernen, insbesondere zurückbewegen. Für die Reaktion auf einen Berührungskontakt kann es unterschiedlich hohe Belastungs- und Reaktionsschwellen geben. Der taktile Industrieroboter (4) kann mit dem Werker in einer MRK-Zone ohne Zaun oder andere Maschinengrenze zusammenarbeiten ohne den Werker zu verletzen. Es kann dabei auch zu schmerzfreien Kontakten kommen.

Der dargestellte taktile Industrieroboter (4) kann als Leichtbauroboter ausgebildet sein und aus leichtgewichtigen Materialien, z.B. Leichtmetallen und Kunststoff bestehen. Er hat auch eine kleine Baugröße. Zudem kann er eine niedrige Tragkraft von z.B. 5 bis ca. 20 kg haben. Das in seiner Konstruktion und Funktion vereinfachte Werkzeug (3) hat ebenfalls ein geringes Gewicht. Der Industrieroboter (4) mit seinem Werkzeug (3) ist dadurch insgesamt leichtgewichtig und kann ohne größeren Aufwand transportiert und von einem Einsatzort zum anderen verlegt werden. Das Gewicht von Industrieroboter (4) und Werkzeug (3) kann unter 50 kg, insbesondere bei ca. 30 kg, liegen. Durch die Möglichkeit des manuellen Teachens kann die Arbeitsvorrichtung (1) schnell und einfach programmiert, in Betrieb genommen und an unterschiedliche Prozesse angepasst werden.

Abwandlungen der gezeigten und beschriebenen Ausführungsbeispiele sind in verschiedener Weise möglich. Die Kinematik und Anordnung der Führungsmittel (50,51) des Drehumsetzers (49) kann vertauscht werden. Statt einer Kulissenführung ist auch eine beliebiger andere konstruktive Ausbildung des Drehumsetzers (49) möglich. Ferner können die Merkmale der verschiedenen Ausführungsbeispiele und der genannten Abwandlungen beliebig miteinander kombiniert, insbesondere auch vertauscht werden.

### BEZUGSZEICHENLISTE

- 1: Arbeitsvorrichtung
- 2: Kupplungseinrichtung, Wechselkupplung
- 3: Werkzeug, Greifer
- 4: Industrieroboter, Leichtbauroboter
- 5: Halter, Werkzeughalter
- 6: Verriegelung
- 7: Betätigungseinrichtung
- 8: Leitungsführung
- 9: Glied, Sockel
- 10: Glied, Basisglied
- 11: Glied, Zwischenglied
- 12: Glied, Zwischenglied
- 13: Glied, Endglied, Hand
- 14: Abtriebselement, Standard
- 15: Abtriebselement, integral
- 16: Achse, Abtriebsachse
- 17: Sensorik
- 18: Schutzverkleidung, Gehäuse
- 19: Robotersteuerung
- 20: Medienanschluss
- 21: Medienleitung roboterintern
- 22: Leitungsanschluss an Kupplung roboterseitig
- 23: Leitungsanschluss an Kupplung werkzeugseitig
- 24: Leitungsaustritt roboterseitig
- 25: Verbindungsleitung
- 26: Kupplungsteil roboterseitig
- 27: Kupplungsteil werkzeugseitig
- 28: mechanische Kupplung
- 29: Medienkupplung
- 30: Kupplungselement roboterseitig, Ringflansch
- 31: Kupplungselement werkzeugseitig, Ringflansch
- 32: Boden
- 33: Adapter für Werkzeug
- 34: Drehsicherung
- 35: Sicherungsmittel, Stift
- 36: Sicherungsmittel, Nut
- 37: Kupplungsmittel medial roboterseitig
- 38: Kupplungsmittel medial werkzeugseitig
- 39: Achse, Kupplungsachse
- 40: Haltemittel translatorisch, Ringnut
- 41: Haltemittel rotatorisch, Ausnehmung
- 42: Riegelelement, Kugel
- 43: Riegelelement, Kugelaufnahme
- 44: Riegelelement, Schulter
- 45: Betätiger, Betätigungsring
- 46: Federbolzen
- 47: Riegelaufnahme, Kugelaufnahme
- 48: Drehsperre, Schlüsselfläche
- 49: Drehumsetzer, Kulissenführung
- 50: Führungselement, Führungsstift
- 51: Führungselement, Führungsbahn, Kulissenbahn
- 52: Raste
- 53: Arretierung, Dreharretierung
- 54: Arretiermittel, Arretiernase
- 55: Arretiermittel, Arretieranschlag
- 56: Auslöser
- 57: Ausnehmung
- 58: Übertrager
- 59: Abfrage, Sensor
- 60: Gestell
- 61: Aufnahmeöffnung
- 62: Halteelement, Haltegabel
- 63: Gabelarm
- 64: Anschlag
- 65: Halteelement, Sicherungsbügel
- 66: Widerlager für Drehsperre, Sperrgabel
- 67: Betätigungsmittel Dreharretierung, Nase
- 68: Werkstück
- 69: Öffnungsrand
- 70: Gegenhalter, Haltnase
- 71: Korpus
- 72: Basis, Bodenplatte
- 73: Kragen
- 74: Federarm
- 75: Kragenteil
- 76: Bereich tangential
- 77: Bereich, Vorsprung
- 78: Anschlag
- 79: Sperrfinger
- 80: Notentriegelung
- 81: Anzeige

- I - VII: Roboterachse

## Patentansprüche

1. Kupplungseinrichtung für einen Industrieroboter (4) und ein Werkzeug (3), wobei die Kupplungseinrichtung (2) mehrere miteinander verbindbare Kupplungsteile (26,27) mit einer mechanischen Kupplung (28) und einer Medienkupplung (29) aufweist, wobei die mechanische Kupplung (28) formschlüssig entlang einer Kupplungsachse (39) ineinander greifende Kupplungselemente (30,31) an den Kupplungsteilen (26,27) und eine zwischen den Kupplungselementen (30,31) wirkende Verriegelung (6) mit einer Betätigungseinrichtung (7) aufweist, die durch eine Verlagerungsbewegung des Industrieroboters (4) aktivierbar ist, **dadurch gekennzeichnet, dass** die Verriegelung (6) kupplungsintern angeordnete Riegelelemente (42-44) aufweist, wobei die Betätigungseinrichtung (7) getrennt von den Riegelelementen (42-44) und relativ zu diesen beweglich an der Kupplungseinrichtung (2) angeordnet ist und wobei die Betätigungseinrichtung (7) zum Öffnen und Schließen der Verriegelung (6) durch eine Drehbewegung des Industrieroboters (4) um die Kupplungsachse (39) aktiviert wird.

2. Kupplungseinrichtung nach Anspruch 1, **dadurch gekennzeichnet, dass** die Betätigungseinrichtung (7) am roboterseitigen Kupplungsteil (26) angeordnet ist.

3. Kupplungseinrichtung nach Anspruch 1 oder 2, **dadurch gekennzeichnet, dass** die Betätigungseinrichtung (7) zum Öffnen und Schließen der Verriegelung (6) eine translatorische Bewegung ausführt, die durch die Drehbewegung des Industrieroboters (4) um die Kupplungsachse (39) induziert wird.

4. Kupplungseinrichtung nach Anspruch 1, 2 oder 3, **dadurch gekennzeichnet, dass** die Betätigungseinrichtung (7) einen Betätiger (45) aufweist, der mit dem roboterseitigen Kupplungselement (30) über einen Drehumsetzer (49) verbunden ist, welcher eine Drehbewegung des Kupplungselements (30) in eine translatorische Bewegung des Betätigers (45) umsetzt.

5. Kupplungseinrichtung nach einem der vorhergehenden Ansprüche, **dadurch gekennzeichnet, dass** die Betätigungseinrichtung (7) eine Dreharretierung (53) für den Betätiger (45) aufweist, die durch eine Verlagerungsbewegung des Industrieroboters (4) aktivierbar ist.

6. Kupplungseinrichtung nach einem der vorhergehenden Ansprüche, **dadurch gekennzeichnet, dass** der Betätiger (45) eine Riegelaufnahme (47) für ein Riegelelement (42) aufweist.

7. Kupplungseinrichtung nach einem der vorhergehenden Ansprüche, **dadurch gekennzeichnet, dass** der Betätiger (45) eine Drehsperre (48), insbesondere eine außenseitige Schlüsselfläche, aufweist, die zum An- und Abkuppeln mit einem externen Widerlager (66) zusammenwirkt.

8. Kupplungseinrichtung nach einem der vorhergehenden Ansprüche, **dadurch gekennzeichnet, dass** die Kupplungselemente (30,31) eine Drehsicherung (34) aufweisen, die im Kupplungsstellung wirksam ist und die Kupplungselemente (30,31) drehschlüssig verbindet.

9. Kupplungseinrichtung nach einem der vorhergehenden Ansprüche, **dadurch gekennzeichnet, dass** das roboterseitige Kupplungsteil (26) als Anbauteil oder als integraler Bestandteil für ein Abtriebselement (14,15) des Industrieroboters (4) ausgebildet ist.

10. Arbeitsvorrichtung mit einem mehrachsigen programmierbaren, bevorzugt taktilen Industrieroboter (4), einer Kupplungseinrichtung (2) und einem Werkzeug (3) **dadurch gekennzeichnet, dass** die Kupplungseinrichtung (2) nach mindestens einem der Ansprüche 1 bis 9 ausgebildet ist.

11. Arbeitsvorrichtung nach Anspruch 10, **dadurch gekennzeichnet, dass** der Industrieroboter (4) eine oder mehrere kraftgesteuerte oder kraftgeregelte Roboterachsen (I - VII) mit einer zugeordneten, einwirkende Belastungen erfassenden Sensorik (17) aufweist.

12. Arbeitsvorrichtung nach Anspruch 10 oder 11, **dadurch gekennzeichnet, dass** der Industrieroboter (4) eine interne Leitungsführung (8) mit fluidischen und/oder elektrischen Medienleitungen (21) durch seine Glieder (9-13) aufweist, die mit einem Leitungsanschluss (22) am Kupplungsteil (26) verbunden ist/sind.

13. Arbeitsvorrichtung nach einem der Ansprüche 10 bis 12, **dadurch gekennzeichnet, dass** die Arbeitsvorrichtung (1) einen Werkzeughalter (5) mit einer Aufnahmeöffnung (61) für die formschlüssige Aufnahme von einem Werkzeug (3) und mit Halteelementen (62,65) für den mechanischen Halt und die translatorische und rotatorische Lagesicherung eines aufgenommenen werkzeugseitigen Kupplungsteils (27) aufweist.

14. Arbeitsvorrichtung nach einem der Ansprüche 10 bis 13, **dadurch gekennzeichnet, dass** ein Werkzeughalter (5) ein Widerlager (66) für eine Drehsperre (48) der Betätigungseinrichtung (7) und ein Betätigungsmittel (67) für eine Dreharretierung (53) der Betätigungseinrichtung (7) aufweist.

15. Kupplungsverfahren für einen Industrieroboter (4) und ein Werkzeug (3) mittels einer Kupplungseinrichtung (2), die mehrere miteinander verbindbare Kupplungsteile (26,27) mit einer mechanischen Kupplung (28) und einer Medienkupplung (29) aufweist, wobei die mechanische Kupplung (28) formschlüssig entlang einer Kupplungsachse (39) ineinander greifende Kupplungselemente (30,31) an den Kupplungsteilen (26,27) und eine zwischen den Kupplungselementen (30,31) wirkende Verriegelung (6) mit einer Betätigungseinrichtung (7) aufweist, die durch eine Verlagerungsbewegung des Industrieroboters (4) aktiviert wird, **dadurch gekennzeichnet, dass** die Verriegelung (6) kupplungsintern angeordnete Riegelelemente (42-44) aufweist, wobei die Betätigungseinrichtung (7) getrennt von den Riegelelementen (42-44) und relativ zu diesen beweglich an der Kupplungseinrichtung (2) angeordnet ist und wobei die Betätigungseinrichtung (7) zum Öffnen und Schließen der Verriegelung (6) durch eine Drehbewegung des Industrieroboters (4) um die Kupplungsachse (39) aktiviert wird.
